# EUROPEAN PATENT SPECIFICATION

(11) **EP 4 418 722 B1**
(45) Date of publication and mention of the grant of the patent: **02.12.2026**
(21) Application number: 22881392.9
(22) Date of filing: 14.10.2022
(51) Int. Cl.: H04W 24/10, H04W 76/34, H04W 12/06, H04L 9/40, H04W 84/06, H04W 4/40, H04W 92/24

(54) **COMMUNICATION RELATED TO USE REPORT**
KOMMUNIKATION IM ZUSAMMENHANG MIT EINEM NUTZUNGSBERICHT
COMMUNICATION LIÉE À UN RAPPORT D'UTILISATION

(30) Priority: 15.10.2021 KR 20210137462; 07.01.2022 KR 20220002942
(43) Date of publication of application: 21.08.2024
(73) Proprietor: LG Electronics Inc., Yeongdeungpo-gu Seoul 07336 (KR)
(72) Inventor: KIM, Jaewoo, Seoul 06772 (KR); KIM, Laeyoung, Seoul 06772 (KR); YOUN, Myungjune, Seoul 06772 (KR)
(74) Representative: Frenkel, Matthias Alexander
(86) International application number: PCT/KR2022/015568
(87) International publication number: WO 2023/063765

(56) References cited:
- WO-A1-2021/041214
- US-A1- 2021 076 202
- LG ELECTRONICS: "Clarifications for UUAA-SM procedure", vol. SA WG2, no. Online, Elbonia; 20211018 - 20211022, 11 October 2021 (2021-10-11), XP052060485, Retrieved from the Internet <URL:https://ftp.3gpp.org/tsg_sa/WG2_Arch/TSGS2_147E_Electronic_2021-10/Docs/S2-2107151.zip S2-2107151_CR_0003_23256_Clarifications_for_UUAA-SM_procedure.docx> [retrieved on 20211011]
- "3rd Generation Partnership Project; Technical Specification Group Services and System Aspects; Support of Uncrewed Aerial Systems (UAS) connectivity, identification and tracking; Stage 2 (Release 17)", 8 September 2021 (2021-09-08), XP052052377, Retrieved from the Internet <URL:https://ftp.3gpp.org/tsg_sa/TSG_SA/TSGS_93E_Electronic_2021_09/Docs/SP-210939.zip 23256-Diff_v100-v200.zip 23256-Diff_v100-v200.docx> [retrieved on 20210908]
- "3rd Generation Partnership Project; Technical Specification Group Services and System Aspects; Procedures for the 5G System (5GS); Stage 2 (Release 17)", 21 September 2021 (2021-09-21), XP052056060, Retrieved from the Internet <URL:https://ftp.3gpp.org/tsg_sa/WG2_Arch/Latest_SA2_Specs/DRAFT_INTERIM/23502-h20_CRs_Implemented.zip 23502-h20_CRs_Implemented.docx> [retrieved on 20210921]
- "3rd Generation Partnership Project; Technical Specification Group Services and System Aspects; System architecture for the 5G System (5GS); Stage 2 (Release 17)", vol. SA WG2, no. V17.1.1, 24 June 2021 (2021-06-24), pages 1 - 526, XP052029600, Retrieved from the Internet <URL:https://ftp.3gpp.org/Specs/archive/23_series/23.501/23501-h11.zip 23501-h11.docx> [retrieved on 20210624]
- QUALCOMM INCORPORATED: "UUAA-SM procedure for re-authorization or re-authentication", 3GPP DRAFT; C1-216146, vol. CT WG1, 14 October 2021 (2021-10-14), pages 1 - 13, XP052060760
- HUAWEI, HISILICON, INTERDIGITAL: "UUAA procedure with network provided UAV location", 3GPP DRAFT; S2-2104930, vol. SA WG2, 31 May 2021 (2021-05-31), pages 1 - 8, XP052023631
- VIVO, INTERDIGITAL, HUAWEI, HISILICON, NOKIA, NOKIA SHANGHAI BELL, QUALCOMM INCORPORATED, SAMSUNG: "De-registration for onboarding registered UE", 3GPP DRAFT; C1-215774, vol. CT WG1, 30 September 2021 (2021-09-30), pages 1 - 64, XP052055060

## Description

### TECHNICAL FIELD

The present disclosure generally relates to mobile communication.

### BACKGROUND ART

3rd generation partnership project (3GPP) long-term evolution (LTE) is a technology for enabling high-speed packet communications. Many schemes have been proposed for the LTE objective including those that aim to reduce user and provider costs, improve service quality, and expand and improve coverage and system capacity. The 3GPP LTE requires reduced cost per bit, increased service availability, flexible use of a frequency band, a simple structure, an open interface, and adequate power consumption of a terminal as an upper-level requirement.

Work has started in international telecommunication union (ITU) and 3GPP to develop requirements and specifications for new radio (NR) systems. 3GPP has to identify and develop the technology components needed for successfully standardizing the new RAT timely satisfying both the urgent market needs, and the more long-term requirements set forth by the ITU radio communication sector (ITU-R) international mobile telecommunications (IMT)-2020 process. Further, the NR should be able to use any spectrum band ranging at least up to 100 GHz that may be made available for wireless communications even in a more distant future.

The NR targets a single technical framework addressing all usage scenarios, requirements and deployment scenarios including enhanced mobile broadband (eMBB), massive machine-type-communications (mMTC), ultra-reliable and low latency communications (URLLC), etc. The NR shall be inherently forward compatible.

In 5GS, there are discussions about supporting Uncrewed Aerial Systems (UAS) based communications.

To receive connectivity services from the network, the UAV performs a USS UAV Authorization/Authentication (UUAA) authentication procedure through API-based Secondary authentication. This authentication process can be performed by the AMF (UUAA-MM) at the time the UAV registers with the network, or by the SMF (UUAA-SM) when creating a PDU Session for the UAS service.

he UAS Service Supplier (USS) may initiate the Re-authentication process through the UAS NF at any time after the end of the UUAA procedure. After the UUAA re-authentication process fails, if the result/response message sent by the USS does not include "indication of whether the network resources related to the UAS service can be released upon UUAA failure", the UAV may communicate and C2 communication with the USS via PDU session, even if the UUAA is failed, until the PDU session is later released due to UUAA revocation. This is because if the UAV's communication is immediately disconnected after the re-authentication fails, it may cause an accident such as the UAV crashing. Therefore, the USS can maintain the UAV's network resources to prevent accidents even if the re-authentication fails.

In the case of traditional Secondary Authentication behavior, the PDU session is released immediately when re-authentication fails. However, in the case of API-based Secondary authentication, the PDU session can be maintained even if re-authentication fails in this way. In this case, the resources of the PDU session can be used to send DL/UL traffic while re-authentication fails until the authentication is revoked. Conventional UPF knows the usage of the entire PDU session, but does not konw the time when the reauthentication fails. Therefore, the network resource usage (the usage of DL/UL data traffic of the PDU session) from the time when the reauthentication fails until the PDU session is released is unknown. To solve this problem, additional operation is required for the existing SMF behavior. For example, UPF does not know the usage of network resources during the period after a failed reauthentication until the PDU session is released, so the charging (or billing) for this period (from failed reauthentication to PDU session release) is unclear.

Prior art is found in LG Electronics, "Clarifications for UUAA-SM procedure", S2-2107151, in "3^{rd} Generation Partnership Project; Technical Specification Group Services and System Aspects; Support of Uncrewed Aerial Systems (UAS) connectivity, identification and tracking; Stage 2 (Release 17)", in "3^{rd} Generation Partnership Project; Technical Specification Group Services and System Aspects; Procedures for the 5G System (5GS), Stage 2 (Release 17)", and in "3^{rd} Generation Partnership Project; Technical Specification Group Services and System Aspects; System Architecture for the 5G System "5GS); Stage 2 (Release 17)".

### TECHNICAL PROBLEM

### TECHNICAL SOLUTION

The invention is set out in the independent claims. Preferred embodiments of the invention are set out in the dependent claims.

Accordingly, a disclosure of the present specification has been made in an effort to solve the aforementioned problem.

According to a disclosure of the present specification, obtaining usage reporting when UUAA re-authentication fails may be supported. For example, according to one aspect of the present disclosure, the SMF may request usage report from the UPF when a UUAA re-authentication fails. According to the present disclosure, the UPF may provide usage report to the SMF for usage after a failed UUAA re-authentication.

According to the disclosure of the present specification, it is possible to solve the problems of the related art.

Effects that can be obtained through specific examples of the present specification are not limited to the effects listed above. For example, various technical effects that a person having ordinary skill in the related art can understand or derive from the present specification may exist. Accordingly, the specific effects of the present specification are not limited to those explicitly described herein, and may include various effects that can be understood or derived from the technical characteristics of the present specification.

### BRIEF DESCRIPTION OF THE DRAWINGS

FIG. 1 shows an example of a communication system to which implementations of the present disclosure is applied.
FIG. 2 shows an example of a wireless device to which implementations of the present disclosure is applied.
FIG. 3 shows an example of a wireless device to which implementations of the present disclosure is applied.
FIG. 4 shows an example of a 5G system architecture to which the implementation of the present specification is applied.
FIG. 5 is another exemplary diagram showing the structure of a radio interface protocol between the UE and the gNB.
FIG. 6 illustrates an example of an architecture of a logical 5GS and EPS for a UAV.
FIG. 7 illustrates an example of conventional operation in the event of a failed re-authentication process.
FIGS. 8a and 8b illustrate an example of a procedure according to one embodiment of the present disclosure.
FIG. 9 illustrates an example of a procedure according to a third example of the present disclosure.

### MODE FOR INVENTION

The following techniques, apparatuses, and systems may be applied to a variety of wireless multiple access systems. Examples of the multiple access systems include a code division multiple access (CDMA) system, a frequency division multiple access (FDMA) system, a time division multiple access (TDMA) system, an orthogonal frequency division multiple access (OFDMA) system, a single carrier frequency division multiple access (SC-FDMA) system, and a multicarrier frequency division multiple access (MC-FDMA) system. CDMA may be embodied through radio technology such as universal terrestrial radio access (UTRA) or CDMA2000. TDMA may be embodied through radio technology such as global system for mobile communications (GSM), general packet radio service (GPRS), or enhanced data rates for GSM evolution (EDGE). OFDMA may be embodied through radio technology such as institute of electrical and electronics engineers (IEEE) 802.11 (Wi-Fi), IEEE 802.16 (WiMAX), IEEE 802.20, or evolved UTRA (E-UTRA). UTRA is a part of a universal mobile telecommunications system (UMTS). 3rd generation partnership project (3GPP) long term evolution (LTE) is a part of evolved UMTS (E-UMTS) using E-UTRA. 3GPP LTE employs OFDMA in DL and SC-FDMA in UL. Evolution of 3GPP LTE includes LTE-A (advanced), LTE-A Pro, and/or 5G NR (new radio).

For convenience of description, implementations of the present disclosure are mainly described in regards to a 3GPP based wireless communication system. However, the technical features of the present disclosure are not limited thereto. For example, although the following detailed description is given based on a mobile communication system corresponding to a 3GPP based wireless communication system, aspects of the present disclosure that are not limited to 3GPP based wireless communication system are applicable to other mobile communication systems.

For terms and technologies which are not specifically described among the terms of and technologies employed in the present disclosure, the wireless communication standard documents published before the present disclosure may be referenced.

In the present disclosure, "A or B" may mean "only A", "only B", or "both A and B". In other words, "A or B" in the present disclosure may be interpreted as "A and/or B". For example, "A, B or C" in the present disclosure may mean "only A", "only B", "only C", or "any combination of A, B and C".

In the present disclosure, slash (/) or comma (,) may mean "and/or". For example, "A/B" may mean "A and/or B". Accordingly, "A/B" may mean "only A", "only B", or "both A and B". For example, "A, B, C" may mean "A, B or C".

In the present disclosure, "at least one of A and B" may mean "only A", "only B" or "both A and B". In addition, the expression "at least one of A or B" or "at least one of A and/or B" in the present disclosure may be interpreted as same as "at least one of A and B".

In addition, in the present disclosure, "at least one of A, B and C" may mean "only A", "only B", "only C", or "any combination of A, B and C". In addition, "at least one of A, B or C" or "at least one of A, B and/or C" may mean "at least one of A, B and C".

Also, parentheses used in the present disclosure may mean "for example". In detail, when it is shown as "control information (PDCCH)", "PDCCH" may be proposed as an example of "control information". In other words, "control information" in the present disclosure is not limited to "PDCCH", and "PDCCH" may be proposed as an example of "control information". In addition, even when shown as "control information (i.e., PDCCH)", "PDCCH" may be proposed as an example of "control information".

Technical features that are separately described in one drawing in the present disclosure may be implemented separately or simultaneously.

Although not limited thereto, various descriptions, functions, procedures, suggestions, methods and/or operational flowcharts of the present disclosure disclosed herein can be applied to various fields requiring wireless communication and/or connection (e.g., 5G) between devices.

Hereinafter, the present disclosure will be described in more detail with reference to drawings. The same reference numerals in the following drawings and/or descriptions may refer to the same and/or corresponding hardware blocks, software blocks, and/or functional blocks unless otherwise indicated.

In the attached drawings, user equipments (UEs) are shown for example. The UE may also be denoted a terminal or mobile equipment (ME). In addition, the UE may be a laptop computer, a mobile phone, a PDA, a smartphone, a multimedia device, or other portable device, or may be a stationary device such as a PC or a car mounted device.

Hereinafter, the UE is used as an example of a wireless communication device (or a wireless apparatus, or a wireless device) capable of wireless communication. An operation performed by the UE may be performed by a wireless communication device. A wireless communication device may also be referred to as a wireless apparatus, a wireless device, or the like. Hereinafter, AMF may mean an AMF node, SMF may mean an SMF node, and UPF may mean a UPF node.

The term "base station" used hereinafter generally refers to a fixed station that communicates with a wireless device and may be denoted by other terms such as evolved-NodeB (eNodeB), evolved-NodeB (eNB), Base Transceiver System (BTS), access point, or Next generation NodeB (gNB).

### I. Techniques and procedures applicable to the disclosure of the present specification

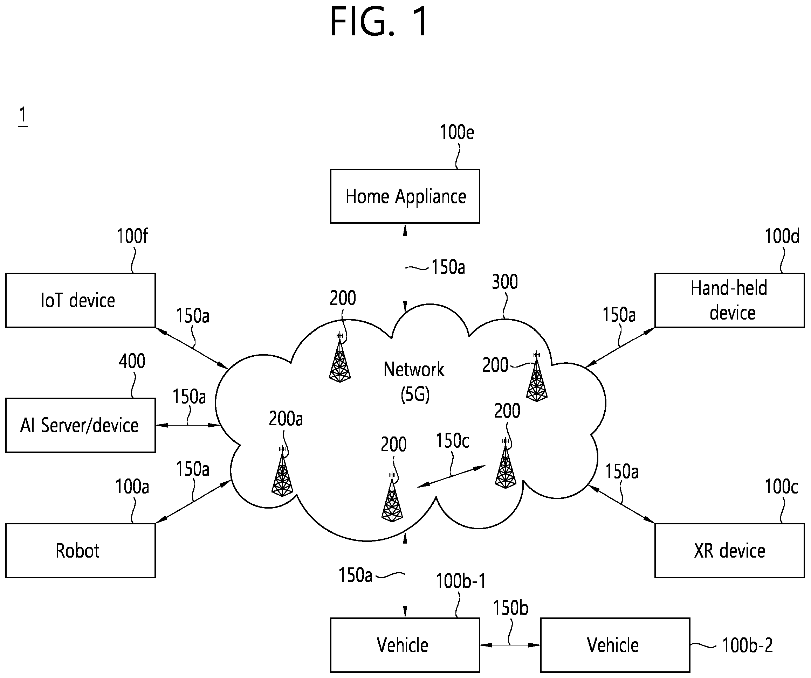

**FIG. 1** **shows an example of a communication system to which implementations of the present disclosure is applied.**

The 5G usage scenarios shown in FIG. 1 are only exemplary, and the technical features of the present disclosure can be applied to other 5G usage scenarios which are not shown in FIG. 1.

Three main requirement categories for 5G include (1) a category of enhanced mobile broadband (eMBB), (2) a category of massive machine type communication (mMTC), and (3) a category of ultra-reliable and low latency communications (URLLC).

Partial use cases may require a plurality of categories for optimization and other use cases may focus only upon one key performance indicator (KPI). 5G supports such various use cases using a flexible and reliable method.

eMBB far surpasses basic mobile Internet access and covers abundant bidirectional work and media and entertainment applications in cloud and augmented reality. Data is one of 5G core motive forces and, in a 5G era, a dedicated voice service may not be provided for the first time. In 5G, it is expected that voice will be simply processed as an application program using data connection provided by a communication system. Main causes for increased traffic volume are due to an increase in the size of content and an increase in the number of applications requiring high data transmission rate. A streaming service (of audio and video), conversational video, and mobile Internet access will be more widely used as more devices are connected to the Internet. These many application programs require connectivity of an always turned-on state in order to push real-time information and alarm for users. Cloud storage and applications are rapidly increasing in a mobile communication platform and may be applied to both work and entertainment. The cloud storage is a special use case which accelerates growth of uplink data transmission rate. 5G is also used for remote work of cloud. When a tactile interface is used, 5G demands much lower end-to-end latency to maintain user good experience. Entertainment, for example, cloud gaming and video streaming, is another core element which increases demand for mobile broadband capability. Entertainment is essential for a smartphone and a tablet in any place including high mobility environments such as a train, a vehicle, and an airplane. Other use cases are augmented reality for entertainment and information search. In this case, the augmented reality requires very low latency and instantaneous data volume.

In addition, one of the most expected 5G use cases relates a function capable of smoothly connecting embedded sensors in all fields, i.e., mMTC. It is expected that the number of potential Internet-of-things (IoT) devices will reach 204 hundred million up to the year of 2020. An industrial IoT is one of categories of performing a main role enabling a smart city, asset tracking, smart utility, agriculture, and security infrastructure through 5G.

URLLC includes a new service that will change industry through remote control of main infrastructure and an ultra-reliable/available low-latency link such as a self-driving vehicle. A level of reliability and latency is essential to control a smart grid, automatize industry, achieve robotics, and control and adjust a drone.

5G is a means of providing streaming evaluated as a few hundred megabits per second to gigabits per second and may complement fiber-to-the-home (FTTH) and cable-based broadband (or DOCSIS). Such fast speed is needed to deliver TV in resolution of 4K or more (6K, 8K, and more), as well as virtual reality and augmented reality. Virtual reality (VR) and augmented reality (AR) applications include almost immersive sports games. A specific application program may require a special network configuration. For example, for VR games, gaming companies need to incorporate a core server into an edge network server of a network operator in order to minimize latency.

Automotive is expected to be a new important motivated force in 5G together with many use cases for mobile communication for vehicles. For example, entertainment for passengers requires high simultaneous capacity and mobile broadband with high mobility. This is because future users continue to expect connection of high quality regardless of their locations and speeds. Another use case of an automotive field is an AR dashboard. The AR dashboard causes a driver to identify an object in the dark in addition to an object seen from a front window and displays a distance from the object and a movement of the object by overlapping information talking to the driver. In the future, a wireless module enables communication between vehicles, information exchange between a vehicle and supporting infrastructure, and information exchange between a vehicle and other connected devices (e.g., devices accompanied by a pedestrian). A safety system guides alternative courses of a behavior so that a driver may drive more safely drive, thereby lowering the danger of an accident. The next stage will be a remotely controlled or self-driven vehicle. This requires very high reliability and very fast communication between different self-driven vehicles and between a vehicle and infrastructure. In the future, a self-driven vehicle will perform all driving activities and a driver will focus only upon abnormal traffic that the vehicle cannot identify. Technical requirements of a self-driven vehicle demand ultra-low latency and ultra-high reliability so that traffic safety is increased to a level that cannot be achieved by human being.

A smart city and a smart home/building mentioned as a smart society will be embedded in a high-density wireless sensor network. A distributed network of an intelligent sensor will identify conditions for costs and energy-efficient maintenance of a city or a home. Similar configurations may be performed for respective households. All of temperature sensors, window and heating controllers, burglar alarms, and home appliances are wirelessly connected. Many of these sensors are typically low in data transmission rate, power, and cost. However, real-time HD video may be demanded by a specific type of device to perform monitoring.

Consumption and distribution of energy including heat or gas is distributed at a higher level so that automated control of the distribution sensor network is demanded. The smart grid collects information and connects the sensors to each other using digital information and communication technology so as to act according to the collected information. Since this information may include behaviors of a supply company and a consumer, the smart grid may improve distribution of fuels such as electricity by a method having efficiency, reliability, economic feasibility, production sustainability, and automation. The smart grid may also be regarded as another sensor network having low latency.

Mission critical application (e.g., e-health) is one of 5G use scenarios. A health part contains many application programs capable of enjoying benefit of mobile communication. A communication system may support remote treatment that provides clinical treatment in a faraway place. Remote treatment may aid in reducing a barrier against distance and improve access to medical services that cannot be continuously available in a faraway rural area. Remote treatment is also used to perform important treatment and save lives in an emergency situation. The wireless sensor network based on mobile communication may provide remote monitoring and sensors for parameters such as heart rate and blood pressure.

Wireless and mobile communication gradually becomes important in the field of an industrial application. Wiring is high in installation and maintenance cost. Therefore, a possibility of replacing a cable with reconstructible wireless links is an attractive opportunity in many industrial fields. However, in order to achieve this replacement, it is necessary for wireless connection to be established with latency, reliability, and capacity similar to those of the cable and management of wireless connection needs to be simplified. Low latency and a very low error probability are new requirements when connection to 5G is needed.

Logistics and freight tracking are important use cases for mobile communication that enables inventory and package tracking anywhere using a location-based information system. The use cases of logistics and freight typically demand low data rate but require location information with a wide range and reliability.

Referring to FIG. 1, the communication system 1 includes wireless devices 100a to 100f, base stations (BSs) 200, and a network 300. Although FIG. 1 illustrates a 5G network as an example of the network of the communication system 1, the implementations of the present disclosure are not limited to the 5G system, and can be applied to the future communication system beyond the 5G system.

The BSs 200 and the network 300 may be implemented as wireless devices and a specific wireless device may operate as a BS/network node with respect to other wireless devices.

The wireless devices 100a to 100f represent devices performing communication using radio access technology (RAT) (e.g., 5G new RAT (NR)) or LTE) and may be referred to as communication/radio/5G devices. The wireless devices 100a to 100f may include, without being limited to, a robot 100a, vehicles 100b-1 and 100b-2, an extended reality (XR) device 100c, a hand-held device 100d, a home appliance 100e, an IoT device 100f, and an artificial intelligence (AI) device/server 400. For example, the vehicles may include a vehicle having a wireless communication function, an autonomous driving vehicle, and a vehicle capable of performing communication between vehicles. The vehicles may include an unmanned aerial vehicle (UAV) (e.g., a drone). The XR device may include an AR/VR/Mixed Reality (MR) device and may be implemented in the form of a head-mounted device (HMD), a head-up display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smartmeter.

In the present disclosure, the wireless devices 100a to 100f may be called user equipments (UEs). A UE may include, for example, a cellular phone, a smartphone, a laptop computer, a digital broadcast terminal, a personal digital assistant (PDA), a portable multimedia player (PMP), a navigation system, a slate personal computer (PC), a tablet PC, an ultrabook, a vehicle, a vehicle having an autonomous traveling function, a connected car, an UAV, an AI module, a robot, an AR device, a VR device, an MR device, a hologram device, a public safety device, an MTC device, an IoT device, a medical device, a FinTech device (or a financial device), a security device, a weather/environment device, a device related to a 5G service, or a device related to a fourth industrial revolution field.

The UAV may be, for example, an aircraft aviated by a wireless control signal without a human being onboard.

The VR device may include, for example, a device for implementing an object or a background of the virtual world. The AR device may include, for example, a device implemented by connecting an object or a background of the virtual world to an object or a background of the real world. The MR device may include, for example, a device implemented by merging an object or a background of the virtual world into an object or a background of the real world. The hologram device may include, for example, a device for implementing a stereoscopic image of 360 degrees by recording and reproducing stereoscopic information, using an interference phenomenon of light generated when two laser lights called holography meet.

The public safety device may include, for example, an image relay device or an image device that is wearable on the body of a user.

The MTC device and the IoT device may be, for example, devices that do not require direct human intervention or manipulation. For example, the MTC device and the IoT device may include smartmeters, vending machines, thermometers, smartbulbs, door locks, or various sensors.

The medical device may be, for example, a device used for the purpose of diagnosing, treating, relieving, curing, or preventing disease. For example, the medical device may be a device used for the purpose of diagnosing, treating, relieving, or correcting injury or impairment. For example, the medical device may be a device used for the purpose of inspecting, replacing, or modifying a structure or a function. For example, the medical device may be a device used for the purpose of adjusting pregnancy. For example, the medical device may include a device for treatment, a device for operation, a device for (in vitro) diagnosis, a hearing aid, or a device for procedure.

The security device may be, for example, a device installed to prevent a danger that may arise and to maintain safety. For example, the security device may be a camera, a closed-circuit TV (CCTV), a recorder, or a black box.

The FinTech device may be, for example, a device capable of providing a financial service such as mobile payment. For example, the FinTech device may include a payment device or a point of sales (POS) system.

The weather/environment device may include, for example, a device for monitoring or predicting a weather/environment.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, a 5G (e.g., NR) network, and a beyond-5G network. Although the wireless devices 100a to 100f may communicate with each other through the BSs 200/network 300, the wireless devices 100a to 100f may perform direct communication (e.g., sidelink communication) with each other without passing through the BSs 200/network 300. For example, the vehicles 100b-1 and 100b-2 may perform direct communication (e.g., vehicle-to-vehicle (V2V)/vehicle-to-everything (V2X) communication). The IoT device (e.g., a sensor) may perform direct communication with other IoT devices (e.g., sensors) or other wireless devices 100a to 100f.

Wireless communication/connections 150a, 150b and 150c may be established between the wireless devices 100a to 100f and/or between wireless device 100a to 100f and BS 200 and/or between BSs 200. Herein, the wireless communication/connections may be established through various RATs (e.g., 5G NR) such as uplink/downlink communication 150a, sidelink communication (or device-to-device (D2D) communication) 150b, inter-base station communication 150c (e.g., relay, integrated access and backhaul (IAB)), etc. The wireless devices 100a to 100f and the BSs 200/the wireless devices 100a to 100f may transmit/receive radio signals to/from each other through the wireless communication/connections 150a, 150b and 150c. For example, the wireless communication/connections 150a, 150b and 150c may transmit/receive signals through various physical channels. To this end, at least a part of various configuration information configuring processes, various signal processing processes (e.g., channel encoding/decoding, modulation/demodulation, and resource mapping/de-mapping), and resource allocating processes, for transmitting/receiving radio signals, may be performed based on the various proposals of the present disclosure.

AI refers to the field of studying artificial intelligence or the methodology that can create it, and machine learning refers to the field of defining various problems addressed in the field of AI and the field of methodology to solve them. Machine learning is also defined as an algorithm that increases the performance of a task through steady experience on a task.

Robot means a machine that automatically processes or operates a given task by its own ability. In particular, robots with the ability to recognize the environment and make self-determination to perform actions can be called intelligent robots. Robots can be classified as industrial, medical, home, military, etc., depending on the purpose or area of use. The robot can perform a variety of physical operations, such as moving the robot joints with actuators or motors. The movable robot also includes wheels, brakes, propellers, etc., on the drive, allowing it to drive on the ground or fly in the air.

Autonomous driving means a technology that drives on its own, and autonomous vehicles mean vehicles that drive without user's control or with minimal user's control. For example, autonomous driving may include maintaining lanes in motion, automatically adjusting speed such as adaptive cruise control, automatic driving along a set route, and automatically setting a route when a destination is set. The vehicle covers vehicles equipped with internal combustion engines, hybrid vehicles equipped with internal combustion engines and electric motors, and electric vehicles equipped with electric motors, and may include trains, motorcycles, etc., as well as cars. Autonomous vehicles can be seen as robots with autonomous driving functions.

Extended reality is collectively referred to as VR, AR, and MR. VR technology provides objects and backgrounds of real world only through computer graphic (CG) images. AR technology provides a virtual CG image on top of a real object image. MR technology is a CG technology that combines and combines virtual objects into the real world. MR technology is similar to AR technology in that they show real and virtual objects together. However, there is a difference in that in AR technology, virtual objects are used as complementary forms to real objects, while in MR technology, virtual objects and real objects are used as equal personalities.

NR supports multiples numerologies (and/or multiple subcarrier spacings (SCS)) to support various 5G services. For example, if SCS is 15 kHz, wide area can be supported in traditional cellular bands, and if SCS is 30 kHz/60 kHz, dense-urban, lower latency, and wider carrier bandwidth can be supported. If SCS is 60 kHz or higher, bandwidths greater than 24.25 GHz can be supported to overcome phase noise.

Here, the radio communication technologies implemented in the wireless devices in the present disclosure may include narrowband internet-of-things (NB-IoT) technology for low-power communication as well as LTE, NR and 6G. For example, NB-IoT technology may be an example of low power wide area network (LPWAN) technology, may be implemented in specifications such as LTE Cat NB1 and/or LTE Cat NB2, and may not be limited to the above-mentioned names. Additionally and/or alternatively, the radio communication technologies implemented in the wireless devices in the present disclosure may communicate based on LTE-M technology. For example, LTE-M technology may be an example of LPWAN technology and be called by various names such as enhanced machine type communication (eMTC). For example, LTE-M technology may be implemented in at least one of the various specifications, such as 1) LTE Cat 0, 2) LTE Cat M1, 3) LTE Cat M2, 4) LTE non-bandwidth limited (non-BL), 5) LTE-MTC, 6) LTE Machine Type Communication, and/or 7) LTE M, and may not be limited to the above-mentioned names. Additionally and/or alternatively, the radio communication technologies implemented in the wireless devices in the present disclosure may include at least one of ZigBee, Bluetooth, and/or LPWAN which take into account low-power communication, and may not be limited to the above-mentioned names. For example, ZigBee technology may generate personal area networks (PANs) associated with small/low-power digital communication based on various specifications such as IEEE 802.15.4 and may be called various names.

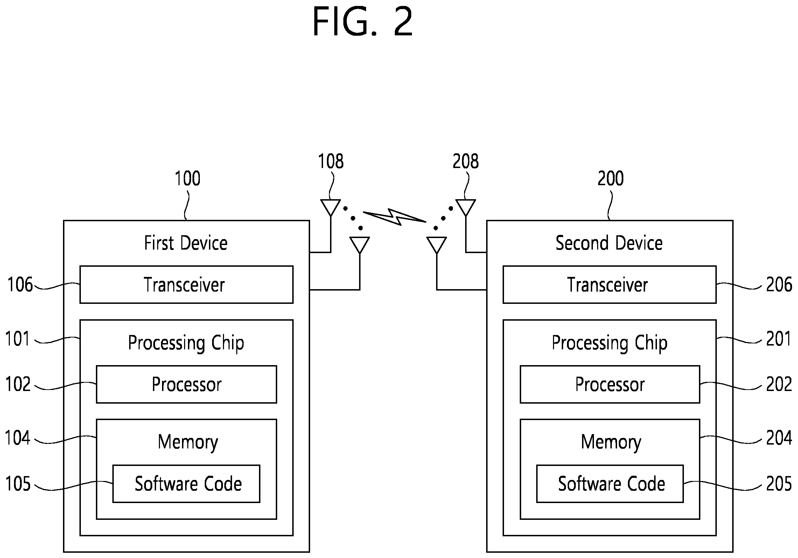

**FIG. 2** **shows an example of wireless devices to which implementations of the present disclosure is applied.**

Referring to FIG. 2, a first wireless device 100 and a second wireless device 200 may transmit/receive radio signals to/from an external device through a variety of RATs (e.g., LTE and NR).

In FIG. 2, {the first wireless device 100 and the second wireless device 200} may correspond to at least one of {the wireless device 100a to 100f and the BS 200}, {the wireless device 100a to 100f and the wireless device 100a to 100f} and/or {the BS 200 and the BS 200} of FIG. 1.

The first wireless device 100 may include at least one transceiver, such as a transceiver 106, at least one processing chip, such as a processing chip 101, and/or one or more antennas 108.

The processing chip 101 may include at least one processor, such a processor 102, and at least one memory, such as a memory 104. It is exemplarily shown in FIG. 2 that the memory 104 is included in the processing chip 101. Additional and/or alternatively, the memory 104 may be placed outside of the processing chip 101.

The processor 102 may control the memory 104 and/or the transceiver 106 and may be configured to implement the descriptions, functions, procedures, suggestions, methods and/or operational flowcharts described in the present disclosure. For example, the processor 102 may process information within the memory 104 to generate first information/signals and then transmit radio signals including the first information/signals through the transceiver 106. The processor 102 may receive radio signals including second information/signals through the transceiver 106 and then store information obtained by processing the second information/signals in the memory 104.

The memory 104 may be operably connectable to the processor 102. The memory 104 may store various types of information and/or instructions. The memory 104 may store a software code 105 which implements instructions that, when executed by the processor 102, perform the descriptions, functions, procedures, suggestions, methods and/or operational flowcharts disclosed in the present disclosure. For example, the software code 105 may implement instructions that, when executed by the processor 102, perform the descriptions, functions, procedures, suggestions, methods and/or operational flowcharts disclosed in the present disclosure. For example, the software code 105 may control the processor 102 to perform one or more protocols. For example, the software code 105 may control the processor 102 to perform one or more layers of the radio interface protocol.

Herein, the processor 102 and the memory 104 may be a part of a communication modem/circuit/chip designed to implement RAT (e.g., LTE or NR). The transceiver 106 may be connected to the processor 102 and transmit and/or receive radio signals through one or more antennas 108. Each of the transceiver 106 may include a transmitter and/or a receiver. The transceiver 106 may be interchangeably used with radio frequency (RF) unit(s). In the present disclosure, the first wireless device 100 may represent a communication modem/circuit/chip.

The second wireless device 200 may include at least one transceiver, such as a transceiver 206, at least one processing chip, such as a processing chip 201, and/or one or more antennas 208.

The processing chip 201 may include at least one processor, such a processor 202, and at least one memory, such as a memory 204. It is exemplarily shown in FIG. 2 that the memory 204 is included in the processing chip 201. Additional and/or alternatively, the memory 204 may be placed outside of the processing chip 201.

The processor 202 may control the memory 204 and/or the transceiver 206 and may be configured to implement the descriptions, functions, procedures, suggestions, methods and/or operational flowcharts described in the present disclosure. For example, the processor 202 may process information within the memory 204 to generate third information/signals and then transmit radio signals including the third information/signals through the transceiver 206. The processor 202 may receive radio signals including fourth information/signals through the transceiver 106 and then store information obtained by processing the fourth information/signals in the memory 204.

The memory 204 may be operably connectable to the processor 202. The memory 204 may store various types of information and/or instructions. The memory 204 may store a software code 205 which implements instructions that, when executed by the processor 202, perform the descriptions, functions, procedures, suggestions, methods and/or operational flowcharts disclosed in the present disclosure. For example, the software code 205 may implement instructions that, when executed by the processor 202, perform the descriptions, functions, procedures, suggestions, methods and/or operational flowcharts disclosed in the present disclosure. For example, the software code 205 may control the processor 202 to perform one or more protocols. For example, the software code 205 may control the processor 202 to perform one or more layers of the radio interface protocol.

Herein, the processor 202 and the memory 204 may be a part of a communication modem/circuit/chip designed to implement RAT (e.g., LTE or NR). The transceiver 206 may be connected to the processor 202 and transmit and/or receive radio signals through one or more antennas 208. Each of the transceiver 206 may include a transmitter and/or a receiver. The transceiver 206 may be interchangeably used with RF unit. In the present disclosure, the second wireless device 200 may represent a communication modem/circuit/chip.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as physical (PHY) layer, media access control (MAC) layer, radio link control (RLC) layer, packet data convergence protocol (PDCP) layer, radio resource control (RRC) layer, and service data adaptation protocol (SDAP) layer). The one or more processors 102 and 202 may generate one or more protocol data units (PDUs) or packet data unit (PDUs) and/or one or more service data unit (SDUs) according to the descriptions, functions, procedures, suggestions, methods and/or operational flowcharts disclosed in the present disclosure. The one or more processors 102 and 202 may generate messages, control information, data, or information according to the descriptions, functions, procedures, suggestions, methods and/or operational flowcharts disclosed in the present disclosure. The one or more processors 102 and 202 may generate signals (e.g., baseband signals) including PDUs, SDUs, messages, control information, data, or information according to the descriptions, functions, procedures, suggestions, methods and/or operational flowcharts disclosed in the present disclosure and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, suggestions, methods and/or operational flowcharts disclosed in the present disclosure.

The one or more processors 102 and 202 may be referred to as controllers, microcontrollers, microprocessors, or microcomputers. The one or more processors 102 and 202 may be implemented by hardware, firmware, software, or a combination thereof. As an example, one or more application specific integrated circuits (ASICs), one or more digital signal processors (DSPs), one or more digital signal processing devices (DSPDs), one or more programmable logic devices (PLDs), or one or more field programmable gate arrays (FPGAs) may be included in the one or more processors 102 and 202. The descriptions, functions, procedures, suggestions, methods and/or operational flowcharts disclosed in the present disclosure may be implemented using firmware or software and the firmware or software may be configured to include the modules, procedures, or functions. Firmware or software configured to perform the descriptions, functions, procedures, suggestions, methods and/or operational flowcharts disclosed in the present disclosure may be included in the one or more processors 102 and 202 or stored in the one or more memories 104 and 204 so as to be driven by the one or more processors 102 and 202. The descriptions, functions, procedures, suggestions, methods and/or operational flowcharts disclosed in the present disclosure may be implemented using firmware or software in the form of code, commands, and/or a set of commands.

The one or more memories 104 and 204 may be connected to the one or more processors 102 and 202 and store various types of data, signals, messages, information, programs, code, instructions, and/or commands. The one or more memories 104 and 204 may be configured by read-only memories (ROMs), random access memories (RAMs), electrically erasable programmable read-only memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the descriptions, functions, procedures, suggestions, methods and/or operational flowcharts disclosed in the present disclosure, to one or more other devices. The one or more transceivers 106 and 206 may receive user data, control information, and/or radio signals/channels, mentioned in the descriptions, functions, procedures, suggestions, methods and/or operational flowcharts disclosed in the present disclosure, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices.

The one or more transceivers 106 and 206 may be connected to the one or more antennas 108 and 208 and the one or more transceivers 106 and 206 may be configured to transmit and receive user data, control information, and/or radio signals/channels, mentioned in the descriptions, functions, procedures, suggestions, methods and/or operational flowcharts disclosed in the present disclosure, through the one or more antennas 108 and 208. In the present disclosure, the one or more antennas 108 and 208 may be a plurality of physical antennas or a plurality of logical antennas (e.g., antenna ports).

The one or more transceivers 106 and 206 may convert received user data, control information, radio signals/channels, etc., from RF band signals into baseband signals in order to process received user data, control information, radio signals/channels, etc., using the one or more processors 102 and 202. The one or more transceivers 106 and 206 may convert the user data, control information, radio signals/channels, etc., processed using the one or more processors 102 and 202 from the base band signals into the RF band signals. To this end, the one or more transceivers 106 and 206 may include (analog) oscillators and/or filters. For example, the one or more transceivers 106 and 206 can up-convert OFDM baseband signals to OFDM signals by their (analog) oscillators and/or filters under the control of the one or more processors 102 and 202 and transmit the up-converted OFDM signals at the carrier frequency. The one or more transceivers 106 and 206 may receive OFDM signals at a carrier frequency and down-convert the OFDM signals into OFDM baseband signals by their (analog) oscillators and/or filters under the control of the one or more processors 102 and 202.

In the implementations of the present disclosure, a UE may operate as a transmitting device in uplink (UL) and as a receiving device in downlink (DL). In the implementations of the present disclosure, a BS may operate as a receiving device in UL and as a transmitting device in DL. Hereinafter, for convenience of description, it is mainly assumed that the first wireless device 100 acts as the UE, and the second wireless device 200 acts as the BS. For example, the processor(s) 102 connected to, mounted on or launched in the first wireless device 100 may be configured to perform the UE behavior according to an implementation of the present disclosure or control the transceiver(s) 106 to perform the UE behavior according to an implementation of the present disclosure. The processor(s) 202 connected to, mounted on or launched in the second wireless device 200 may be configured to perform the BS behavior according to an implementation of the present disclosure or control the transceiver(s) 206 to perform the BS behavior according to an implementation of the present disclosure.

In the present disclosure, a BS is also referred to as a node B (NB), an eNode B (eNB), or a gNB.

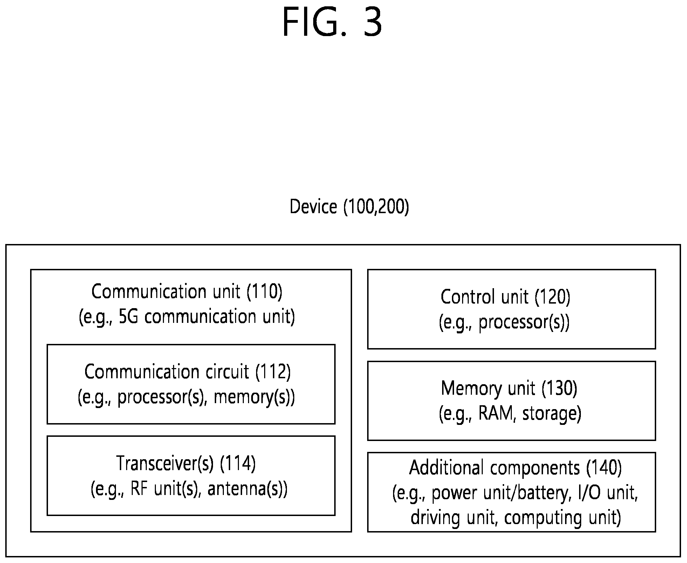

**FIG. 3** **shows an example of a wireless device to which implementations of the present disclosure is applied.**

The wireless device may be implemented in various forms according to a use-case/service (refer to FIG. 1).

Referring to FIG. 3, wireless devices 100 and 200 may correspond to the wireless devices 100 and 200 of FIG. 2 and may be configured by various elements, components, units/portions, and/or modules. For example, each of the wireless devices 100 and 200 may include a communication unit 110, a control unit 120, a memory unit 130, and additional components 140. The communication unit 110 may include a communication circuit 112 and transceiver(s) 114. For example, the communication circuit 112 may include the one or more processors 102 and 202 of FIG. 2 and/or the one or more memories 104 and 204 of FIG. 2. For example, the transceiver(s) 114 may include the one or more transceivers 106 and 206 of FIG. 2 and/or the one or more antennas 108 and 208 of FIG. 2. The control unit 120 is electrically connected to the communication unit 110, the memory unit 130, and the additional components 140 and controls overall operation of each of the wireless devices 100 and 200. For example, the control unit 120 may control an electric/mechanical operation of each of the wireless devices 100 and 200 based on programs/code/commands/information stored in the memory unit 130. The control unit 120 may transmit the information stored in the memory unit 130 to the exterior (e.g., other communication devices) via the communication unit 110 through a wireless/wired interface or store, in the memory unit 130, information received through the wireless/wired interface from the exterior (e.g., other communication devices) via the communication unit 110.

The additional components 140 may be variously configured according to types of the wireless devices 100 and 200. For example, the additional components 140 may include at least one of a power unit/battery, input/output (I/O) unit (e.g., audio I/O port, video I/O port), a driving unit, and a computing unit. The wireless devices 100 and 200 may be implemented in the form of, without being limited to, the robot (100a of FIG. 1), the vehicles (100b-1 and 100b-2 of FIG. 1), the XR device (100c of FIG. 1), the hand-held device (100d of FIG. 1), the home appliance (100e of FIG. 1), the IoT device (100f of FIG. 1), a digital broadcast terminal, a hologram device, a public safety device, an MTC device, a medicine device, a FinTech device (or a finance device), a security device, a climate/environment device, the AI server/device (400 of FIG. 1), the BSs (200 of FIG. 1), a network node, etc. The wireless devices 100 and 200 may be used in a mobile or fixed place according to a use-example/service.

In FIG. 3, the entirety of the various elements, components, units/portions, and/or modules in the wireless devices 100 and 200 may be connected to each other through a wired interface or at least a part thereof may be wirelessly connected through the communication unit 110. For example, in each of the wireless devices 100 and 200, the control unit 120 and the communication unit 110 may be connected by wire and the control unit 120 and first units (e.g., 130 and 140) may be wirelessly connected through the communication unit 110. Each element, component, unit/portion, and/or module within the wireless devices 100 and 200 may further include one or more elements. For example, the control unit 120 may be configured by a set of one or more processors. As an example, the control unit 120 may be configured by a set of a communication control processor, an application processor (AP), an electronic control unit (ECU), a graphical processing unit, and a memory control processor. As another example, the memory unit 130 may be configured by a RAM, a DRAM, a ROM, a flash memory, a volatile memory, a non-volatile memory, and/or a combination thereof.

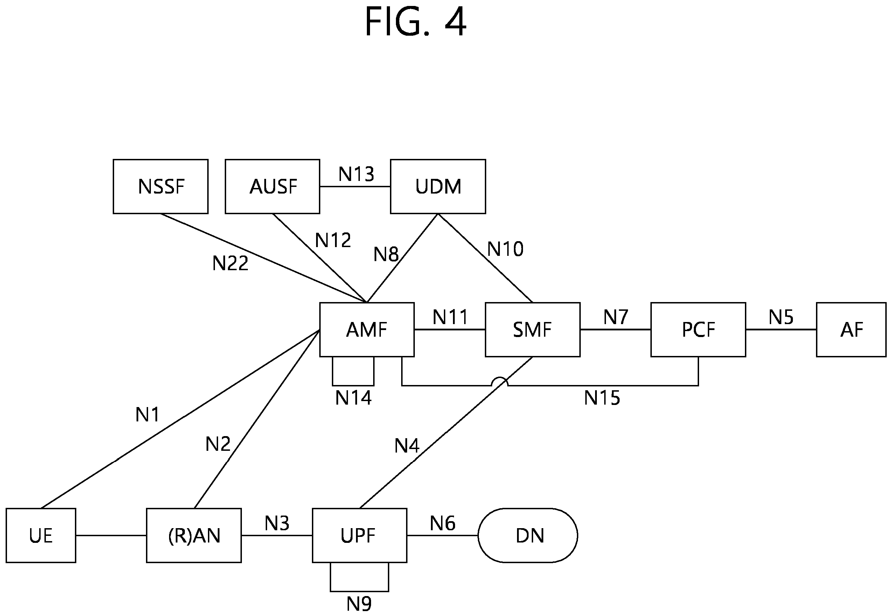

**FIG. 4** **shows an example of a 5G system architecture to which the implementation of the present specification is applied.**

The 5G system (5GS; 5G system) structure consists of the following network functions (NFs).
- AUSF (Authentication Server Function)
- AMF (Access and Mobility Management Function)
- DN (Data Network), e.g. operator services, internet access or third-party services
- USDF (Unstructured Data Storage Function)
- NEF (Network Exposure Function)
- I-NEF (Intermediate NEF)
- NRF (Network Repository Function)
- NSSF (Network Slice Selection Function)
- PCF (Policy Control Function)
- SMF (Session Management Function)
- UDM (Unified Data Management)
- UDR (Unified Data Repository)
- UPF (User Plane Function)
- UCMF (UE radio Capability Management Function)
- AF (Application Function)
- UE (User Equipment)
- (R)AN ((Radio) Access Network)
- 5G-EIR (5G-Equipment Identity Register)
- NWDAF (Network Data Analytics Function)
- CHF (Charging Function)

In addition, the following network functions may be considered.
- N3IWF (Non-3GPP InterWorking Function)
- TNGF (Trusted Non-3GPP Gateway Function)
- W-AGF (Wireline Access Gateway Function)

FIG. 4 shows the 5G system structure of a non-roaming case using a reference point representation that shows how various network functions interact with each other.

In FIG. 4, UDSF, NEF and NRF are not described for clarity of the point-to-point diagram. However, all network functions shown can interact with UDSF, UDR, NEF and NRF as needed.

For clarity, the connection between the UDR and other NFs (e.g. PCFs) is not shown in FIG. 4. For clarity, the connection between NWDAF and other NFs (e.g. PCFs) is not shown in FIG. 4.

The 5G system architecture includes the following reference points.
- N1: the reference point between the UE and the AMF.
- N2: the reference point between (R)AN and AMF.
- N3: the reference point between (R)AN and UPF.
- N4: the reference point between SMF and UPF.
- N6: the reference point between UPF and data network.
- N9: the reference point between two UPFs.

The following reference points show the interactions that exist between NF services in NF.
- N5: the reference point between PCF and AF.
- N7: the reference point between SMF and PCF.
- N8: the reference point between UDM and AMF.
- N10: the reference point between UDM and SMF.
- N11: the reference point between AMF and SMF.
- N12: the reference point between AMF and AUSF.
- N13: the reference point between UDM and AUSF.
- N14: the reference point between two AMFs.
- N15: In the non-roaming scenario, indicates the reference point between the PCF and the AMF, in the roaming scenario, indicates the reference point between the AMF and the PCF of the visited network.
- N16: the reference point between two SMFs (in case of roaming, between the SMF of the visited network and the SMF of the home network)
- N22: the reference point between AMF and NSSF.
- N30: the reference point between PCFk and NEF.
- N33: the reference point between AF and NEF.

In some cases, it may be necessary to connect two NFs to each other to service the UE.

For reference, in FIG. 4, an AF by a third party other than an operator may be connected to 5GC through NEF.

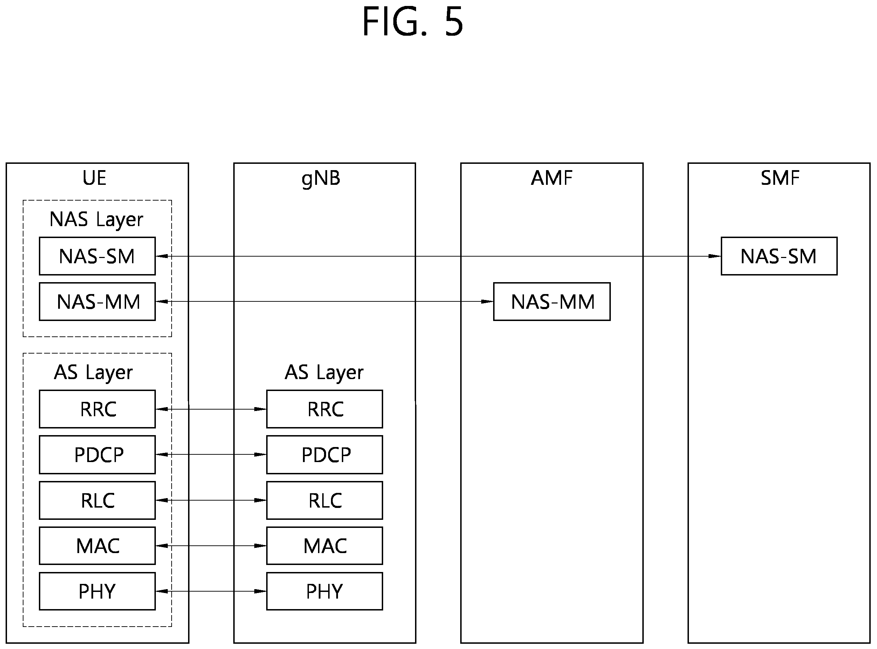

**FIG. 5** **is another exemplary diagram showing a structure of a radio interface protocol between a UE and a gNB.**

The radio interface protocol is based on the 3GPP radio access network standard. The radio interface protocol is horizontally composed of a physical layer, a data link layer, and a network layer, and is vertically divided into a user plane for transmission of data information and a control plane for transfer of control signal (signaling).

The protocol layers may be divided into L1 (first layer), L2 (second layer), and L3 layer (third layer) based on the lower three layers of the open system interconnection (OSI) reference model widely known in communication systems.

Hereinafter, each layer of the radio protocol will be described.

The first layer, the physical layer, provides an information transfer service using a physical channel. The physical layer is connected to an upper medium access control layer through a transport channel, and data between the medium access control layer and the physical layer is transmitted through the transport channel. In addition, data is transmitted between different physical layers, that is, between the physical layers of a transmitting side and a receiving side through a physical channel.

The second layer includes a medium access control (MAC) layer, a radio link control (RLC) layer, and a packet data convergence protocol (PDCP) layer.

The third layer includes radio resource control (hereinafter abbreviated as RRC). The RRC layer is defined only in the control plane and is in charge of control of logical channels, transport channels, and physical channels related to configuration, reconfiguration and release of radio bearers. In this case, RB refers to a service provided by the second layer for data transfer between the UE and the E-UTRAN.

The NAS layer performs functions such as connection management (session management) and mobility management.

The NAS layer is divided into a NAS entity for mobility management (MM) and a NAS entity for session management (SM).

### 1) NAS entity for MM provides the following functions in general.

NAS procedures related to AMF include the following.
- Registration management and access management procedures. AMF supports the following functions.
- Secure NAS signal connection between UE and AMF (integrity protection, encryption)

### 2) The NAS entity for SM performs session management between the UE and the SMF.

The SM signaling message is processed, that is, generated and processed, at an NAS-SM layer of the UE and SMF. The contents of the SM signaling message are not interpreted by the AMF.
- In the case of SM signaling transmission,
- The NAS entity for the MM creates a NAS-MM message that derives how and where to deliver an SM signaling message through a security header representing the NAS transmission of SM signaling and additional information on a received NAS-MM.
- Upon receiving SM signaling, the NAS entity for the SM performs an integrity check of the NAS-MM message, analyzes additional information, and derives a method and place to derive the SM signaling message.

Meanwhile, in FIG. 4, the RRC layer, the RLC layer, the MAC layer, and the PHY layer located below the NAS layer are collectively referred to as an access stratum (AS).

A network system (i.e., 5GC) for next-generation mobile communication (i.e., 5G) also supports non-3GPP access. An example of the non-3GPP access is typically a WLAN access. The WLAN access may include both a trusted WLAN and an untrusted WLAN.

In the system for 5G, an AMF performs registration management (RM: Registration Management) and connection management (CM: Connection Management) for 3GPP access as well as non-3GPP access.

A Multi-Access (MA) PDU session using both a 3GPP access and a non-3GPP access may be used.

The MA PDU session is a PDU session that can be serviced simultaneously with 3GPP access and non-3GPP access using one PDU session.

### II. Techniques and Procedures Related to the present disclosure

The following describes techniques and procedures related to the disclosure of the present disclosure. The following may also describe examples of problems that the disclosure seeks to solve.

In 5G, support for Uncrewed Aerial Systems (UAS) is being discussed. A UAS may consist of one or more unmanned aerial vehicles (UAVs) and one unmanned aerial vehicle controller (UAV-C). The UAVs may be controlled by the UAV Controller over a Command and Control (C2) link in a 3GPP mobile network or a non-3GPP mobile network.

As used herein, C2 communication may refer to Command and Control (C2) Communication. C2 communication may mean a user plane link that carries messages containing command and control information for operating the UAV from the UAV controller or Uncrewed Aircraft Systems Traffic Management (UTM) to the UAV, or reports telemetry data from the UAV to the UAV controller or UTM.

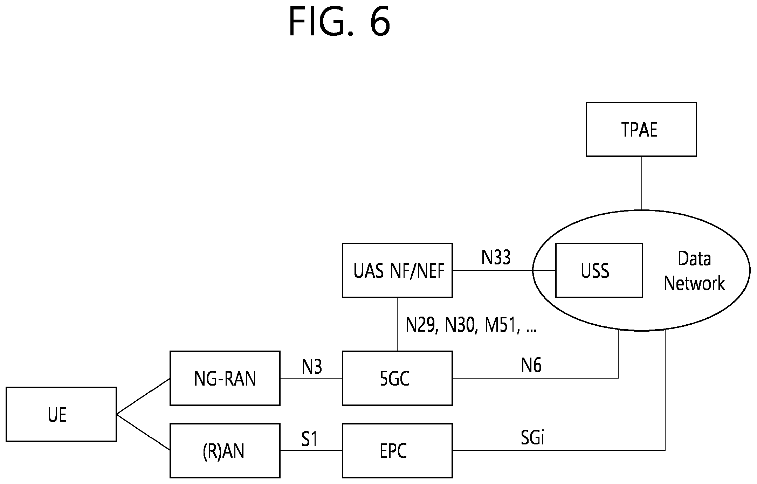

For the management of the UAS, the UAS Service Supplier (USS)/UAS Traffic Management (UTM) and the UAV can exchange application data traffic over the 3GPP mobile network. The UAV may be considered as a UE. For example, the example in FIG. 6 below illustrates a logical 5GS and EPS architecture for a UAV. Further details can be found in TS 23.256 V17.0.0.

The following drawings are intended to illustrate specific embodiments of the present disclosure. The designations of specific devices or the designations of specific signals/messages/fields shown in the drawings are for illustrative purposes only, and the technical features of the present disclosure are not limited to the specific designations used in the drawings below.

**FIG. 6** **illustrates an example of an architecture of a logical 5GS and EPS for a UAV.**

FIG. 6 shows an example of a logical 5GS and EPS architecture for UAVs.

In order to receive connectivity services from the network, the UAV must perform an authentication procedure through the UAV USS authentication and authorization procedure (UUAA). For example, depending on the network operator's policy, authentication may be performed in the following ways
1) The UAV may perform UUAA during the procedure of registering to the network. For example, the UAV may have an Aerial UE subscription in its Access and Mobility Subscription data. If the registration request message transmitted by the UAV includes the CAA-Level UAV ID, UUAA may be performed (this may be referred to as UUAA-MM). If UUAA-MM is not performed, the UAV may perform UUAA during the PDU session establishment procedure.
2) The UAV may perform UUAA during the PDU session establishment procedure of the DNN for the UAV service (PDN connection in case of EPS) (this may be referred to as UUAA-SM): For 5GS, UUAA-SM may be initiated by the SMF when the UAV provides the CAA-Level UAV ID in the PDU session establishment request message. For EPS, it may be initiated by SMF+PGW-C when the UAV provides the CAA-Level UAV ID to the ESM message container.

UAV communications may inlcude USS communications and C2 communications between the UAV and the USS. USS communication can be user plane data transmission except C2 communication. The PDU Session/PDN connection for C2 communication and the PDU Session/PDN connection for USS communication may be used in common or separately. That is, the PDU Session/PDN connection for C2 communication and the PDU Session/PDN connection for USS communication may be the same or different.

UAS Network Function is supported by Network Exposure Function (NEF) or Service Capability Exposure Function (SCEF)+NEF, UAS Network Function can be used for external exposure of services to USS. UAS-NF may use the existing exposure services of NEF/SCEF for operations such as authentication/authorization of UAVs, flight permission, revocation of UAV-UAVC pairing permission and related operations, location reporting, and control of QoS/traffic filtering for C2 communication. The UAS NF may store the results of the UUAA-MM process and the results of the UUAA-SM process. In addition, to support re-authentication by the request of the USS, the UAS NF may store whether the re-authentication should be requested to the AMF or the SMF/SMF+PGW-C, and may store the address of the AMF or SMF/SMF+PGW-C currently providing the service.

The USS may initiate the Re-authentication procedure through the UAS NF at any time after the UUAA process has ended. UUAA re-authentication can be performed via SMF (UUAA-SM) or AMF (UUAA-MM) depending on the network settings. The result of the re-authentication may be transferred from the USS to the UE via SMF (UUAA-SM) or AMF (UUAA-MM) through the UAS NF.

If the re-authentication result is a failure, immediately releasing all PDU sessions may cause a problem that the UAV cannot be commanded and controlled and positioned. Therefore, to avoid this problem, the USS may include an "indication (or indication) of whether network resources related to the UAS service can be released in case of UUAA failure" in the re-authentication result/response when sending the re-authentication result/response message.

AMFs received this indication may release PDU sessions related to UAS services and perform network-initiated de-registration procedures. SMFs received the corresponding indication may release resources associated with UAS services (release PDU sessions) in case of UUAA failure.

If the UUAA fails and the corresponding indication is not sent, the AMF or SMF may maintain the resources associated with the UAS service. Thus, based on the existing PDU session, the UAV may perform communication with the USS and pefrom C2 communications. The USS may later release the UAS-related resources through the UUAA revocation process.

In various examples in the preset diclosure, including or not including "an indication (or indications) of whether UAS service-related network resources may be released upon UUAA failure" may be interpreted to include "information about whether UAS service-related network resources may be released upon UUAA failure" or "information about whether UAS service-related network resources may be maintained upon UUAA failure (or information indicating that they should not be released)," respectively.

According to the conventional 5GS technology, the Usage Report from the UPF can be delivered from the UPF to the SMF by the N4 interface interaction between the SMF and the UPF.

An N4 Session context can be identified by its N4 Session ID. To store parameters related to an N4 session, including the N4 Session ID, any Packet Detection Rules (PDRs), Usage Reporting Rules (URRs), QoS Enforcement Rules (QERs), and Forwarding Action Rules (FARs) or Multi-Access Rules (MARs) used in the N4 session, SMF and UPF can each generate an N4 Session context.

PDRs have the necessary information to distinguish packets arriving at the UPF, and each and every PDR can be used to detect packets for a specific transmission direction (uplink and/or downlink). URRs may define how packets are measured and when and by what means they will deliver measurement reports.

The UPF may transmit usage reports to inform the SMF about the measurement of activated URRs or the detection of application traffic from activated PDRs. Usage reports for each URR may be generated repeatedly if the trigger event is valid. A Final Usage Report may be transmitted for a URR when the URR is no longer active, either when the URR is removed, or when all references to this URR are removed from PDRs belonging to the N4 session. If the N4 session is removed due to a PDU session release, UPF may trnasmit an N4 Session Release response message including a Usage Report. In this case, the Termination Report (TERMR) field in the Usage Report Trigger field may be set to 1, indicating that the Usage Report is due to the termination of the N4 session.

The Information Elements (IEs) of the PDR that are updated over the N4 Session from SMF to UPF are defined in Table 7.5.2.2-1 (Create PDR IE within PFCP Session Establishment Request) of TS 29.244 V16.6.0. The PDR may include Packet Detection Information (PDI) (see Table 7.5.2.2-2 in TS 29.244 V16.6.0) to detect the required packets and a URR ID List (URR) to receive usage information for the packets filtered by the PDI. The URR may include a usage measurement method and a reporting trigger, and multiple URRs may be included within a single PDR.

Depending on the Measurement method (see Table 7.5.2.4-1 in TS 29.244 V16.6.0) in the URR IE (see Figure 8.2.40-1 in TS 29.244 V16.6.0), the UPF may measure usage by one or more of the following methods: duration, Volume(traffic volume), Event(specific event). The Reporting Trigger in the URR (see Figure 8.2.19-1 in V16.6.0 of TS 29.244) may specify the conditions under which measured usage reports are forwarded from the UPF to the SMF.

Within the Packet Forwarding Control Protocol (PFCP) session establishment request message, the SMF may generate a PDR Information Element (IE).

A PDR IE may include a PDI IE. The PDI IE may contain information about the PDI to which the incoming packet is matched. For a description of specific PDI IEs, see Table 7.5.2.2-2 of TS 29.244 V16.6.0.

The PDR IE may include a URR ID IE. A URR ID may be present when a measurement behavior is applied to a packet that matches a PDR. If a URR ID exists, this IE may include the URR ID to be associated with the PDR. Multiple IEs within the same IE type may exist to represent a list of URRs to be associated with a PDR.

Within the PFCP session establishment request message, the SMF may generate a URR IE.

The URR IE may include a Measurement Method IE. This IE may indicate how network resource usage is to be measured. For example, the Measurement Method IE may include information about whether a data volume, duration (that is, time), combined volume/duration, or event should be measured. The Measurement Method IE may include a plurality of octets consisting of 8 bits. For example, Octet 5 may be encoded as shown in the following example:
- Bit 1 - DURAT (Duration): When set to "1", it can indicate a request to measure the duration of the traffic.
- Bit 2 - VOLUM: When set to "1", it can indicate a request to measure traffic volume.
- Bit 3 - EVENT (Event): When set to "1", it can indicate a request to measure an event.
- Bits 4 through 8: Reserved, may be set to "0" for future use.

The URR IE can include a Reporting Triggers IE. This IE may need to indicate triggers for reporting network resource usage to the CP function. For example, it can display triggers for periodic reporting or reporting when a threshold or envelope closure is reached, or when the SMF instructs the UPF to report the receipt of an End Marker packet from a previous I-UPF during the service request procedure. The Reporting Triggers IE can contain multiple octets of 8 bits. The Reporting Triggers IE can indicate a reporting trigger for the UP function to transmit a report to the CP function. For example, Octet 5 may be encoded as shown in the following example:
- Bit 1 - PERIO (Periodic Reporting): When set to "1", indicates that periodic reporting is requested.
- Bit 2 - VOLTH (Volume Threshold): When set to "1", can indicate a reporting request when data volume usage reaches the volume threshold.
- Bit 3 - Time Threshold (TIMTH): When set to "1", it can indicate a report request when time usage reaches the time threshold.
- Bit 4 - Quota Holding Time (QUHTI): When set to "1", it can indicate a report request if no packets have been received for a period exceeding the Quota Holding Time.
- Bit 5 - Start of Traffic (START): When set to "1", it can indicate a reporting request when it detects the start of SDF or Application traffic.
- Bit 6 - Stop of Traffic (STOPT): When set to "1", can indicate a reporting request when detecting a stop of SDF or application traffic.
- Bit 7 - Dropped DL Traffic Threshold (DROTH): When set to "1", it can indicate a report request when the dropped DL traffic reaches a threshold.
- Bit 8: - Linked Usage Reporting (LIUSA): When set to "1", it may indicate a request for linked usage reporting, i.e., a request to report usage reports for a URR when usage reports for the associated URR are reported.

For example, Octet 6 can be encoded as shown in the following example:
- Bit 1 -VOLQU (Volume Quota): When set to "1", it can indicate a report request when the Volume Quota is exhausted.
- Bit 2 - Time Quota (TIMQU): When set to "1", it can indicate a report request when the time quota is exhausted.
- Bit 3 - Envelope Closure (ENVCL): Set to "1" to indicate a report request when the Envelope Closure condition is met.
- Bit 4 - MAC Addresses Reporting (MACAR): When set to "1", it may indicate a request to report the MAC (Ethernet) address used as the source address of the frame sent by the UE to the UL.
- Bit 5 - Event Threshold (EVETH): When set to "1", it can indicate a report request when an event threshold is reached..
- Bit 6 - Event Quota (EVEQU): When set to "1", it can indicate a report request when the event quota is reached.
- Bit 7 - IP Multicast Join/Leave (IPMJL): When set to "1", it can indicate a reporting request when UPF adds or removes a PDU session to or from the DL replication tree associated with an IP multicast flow.
- Bit 8: - Quota Validity Time (QUVTI): When set to "1", it can indicate a usage report being reported for a URR due to the expiration of the quota validity timer.

For example, Octet 7 can be encoded as shown in the following example:
- Bit 1 - Report the End Marker Reception (REEMR): When set to "1", the SMF can instruct the UPF to report the receipt of End Marker packets.
- Bits 2 through 8: Reserved, may be set to "0" for future use.

Based on the PDR and URR configured by the SMF, the UPF may transmit a usage report, Usage Report IE (see Table 7.5.8.3-1 in TS 29.244 V16.6.0), as shown in the following example. The UPF may transmit a Usage Report for one or more of the following contents: duration, Volume, or Event, depending on the measurement method of the URR. The UPF may indicate in the Usage Report Trigger field (see Figure 8.2.41-1 in TS 29.244 V16.6.0) the condition that triggered the corresponding usage report.

UPF may generate a Usage Report IE within a PFCP session reporting request message.

The Usage Report IE can include a URR ID and a Usage Report Trigger IE. The URR ID can be an ID that identifies the URR for which the usage of this Usage report is to be reported. For example, if an SMF sends URRs to a UPF, and the UPF sends a Usage report to the SMF, this Usage report might include the URR ID of the URRs sent by the SMF. The Usage Report Trigger IE can identify the trigger for this usage report. The Usage Report Trigger IE can include multiple octets of 8 bits.

For example, Octet 5 can be encoded as shown in the following example:
- Bit 1 - PERIO (Periodic Reporting): Set to "1" to indicate periodic reporting.
- Bit 2 - Volume Threshold (VOLTH): When set to "1", it can indicate that the data volume usage has reached the volume threshold.
- Bit 3 - Time Threshold (TIMTH): Set to "1" to indicate that time usage has reached the time threshold.
- Bit 4 - Quota Holding Time (QUHTI): When set to "1", it can indicate that no packets have been received for a period exceeding the Quota Holding Time.
- Bit 5 - Start of Traffic (START): When set to "1 ", it can indicate that the start of traffic has been detected.
- Bit 6 - STOPT (Stop of Traffic): Set to "1" to indicate that a stop of traffic has been detected.
- Bit 7 - Dropped DL Traffic Threshold (DROTH): Set to "1" to indicate that the threshold of DL traffic being dropped has been reached.
- Bit 8 - Immediate Report (IMMER): When set to "1", it can indicate an immediate report for CP capability needs.

For example, Octet 6 can be encoded as shown in the following example:
- Bit 1 - Volume Quota (VOLQU): When set to "1", it can indicate that the volume quota has been exhausted.
- Bit 2 - Time Quota (TIMQU): When set to "1", it can indicate that the time quota has been exhausted.
- Bit 3 - Linked Usage Reporting (LIUSA): When set to "1", indicates linked usage reporting, i.e., usage reports reported for a URR due to usage reports reported for a linked URR.
- Bit 4 - Termination Report (TERMR): When set to "1", it may indicate a usage report being reported for the URR due to termination of the PFCP session (in the PFCP Session Delete response), or a usage report (in the PFCP Session Modify response)being reported for the URR due to detachment or removal of the URR from the last PDR.
- Bit 5 - Monitoring Time (MONIT): When set to "1", it indicates that the monitoring time has been reached and usage reports are being reported for the URR.
- Bit 6 - Envelope Closure (ENVCL): When set to "1", it can indicate that a usage report is generated for Envelope Closure.
- Bit 7 - MAC Addresses Reporting (MACAR): When set to "1", it can indicate usage reporting, where the UE reports the MAC (Ethernet) address used as the source address of frames sent to the UL.
- Bit 8: Event Threshold (EVETH): When set to "1", it can indicate that a usage report is generated when an event threshold is reached.

For example, Octet 7 can be encoded as shown in the following example:
- Bit 1 - Event Quota (EVEQU): When set to "1", it can indicate that the event quota has been exhausted.
- Bit 2 - Termination By UP function Report (TEBUR): When set to "1", it can indicate the usage report reported for the URR due to the termination of a PFCP session initiated by the UP function.
- Bit 3 - IP Multicast Join/Leave (IPMJL): When set to "1", this may indicate usage reported for the URR because UPF is adding or removing PDU sessions to/from the DL replication tree associated with IP multicast flows.
- Bit 4 - Quota Validity Time (QUVTI): When set to "1", it can indicate a usage report being reported for a URR due to the expiration of the quota validity timer.
- Bit 5 - End Marker Reception REport (EMRRE): This may indicate that the UP function has received an End Marker from the previous I-UPF.
- Bits 6 through 8: Reserved, may be set to "0" for future use.

Depending on the measurement method, SMFs can use reporting triggers as follows

If the measurement method is volume-based:
- Through the Volume Threshold IE, SMFs may request UPF to send a usage report when a certain traffic usage is reached.
- If Volume Quota IE is enabled, the SMF may request that the UPF stop forwarding packets when the measured traffic reaches a set usage limit, and can also request that the UPF send usage reports.

If the measurement method is time-based:
- Through Time Threshold IE, SMFs may request UPF to transmit usage reports after a certain amount of time has passed.
- SMFs may use Time Quota to request that UPF stop forwarding packets when a set time limit is reached, and may also request that UPF send usage reports.

After UPF generates usage report, which to be forwarded to SMF, the UPF may perform actions such as the following examples:
- The UPF may reset the count currently being measured for that URR (the UPF transmits a usage report for the usage since the last usage report for the URR).
- If a threshold is reached and a usage report is sent, the UPF may reapply all Volume/Time/Event Thresholds for that URR.
- Until further instructions are received from the SMF, UPF may continue to measure usage by applying the existing parameters.
- When the UPF receives a new threshold or quota from the SMF for a URR that is already measuring usage, the UPF may apply the measurements count for the URR being measured against the new threshold or quota.

For example, the Measurement method of the URR can be set to volume, and the Reporting trigger can be set to Voulme threshold = 10 Mbytes, Volume quota = 100 Mbytes. In this case, the UPF measures the packet usage of the UE, and when the usage reaches 10 Mbytes, the UPF may transmit a usage report to the SMF. After transmitting the usage report, the UPF may reset the measurement and adjust the remaining quota to 90 Mbytes. After every additional 10 Mbytes of usage, UPF may forward a usage report to the SMF. When the quota is reached with a total of 100 Mbytes of usage, UPF may stop forwarding packets and send 10 Mbytes of usage reporting to the SMF.

In the example above, there may be instances where you are allocated a new volume quota before you have exhausted your total quota of 100 Mbytes. For example, if the SMF updates URR to set the volume quota to 100 Mbytes after transmitting a usage report totaling 90 Mbytes and only 10 Mbytes remain in the limit, UPF may forward packets up to 190 Mbytes.

By setting the Monitoring Time IE of the URR for all measurement methods, the SMF can request the UPF to report network resource usage before and after a specific time. The UPF may transmit two usage reports for one URR ID. Each usage report can indicate whether it is before (BEF) or after (ATF) the Monitoring Time via the Usage Information field.

When an N4 Session is terminated, UPF may transfer a usage report in the N4 Session Deletion Response for each URR associated with that N4 Session, for the usage since the last usage report.

The SMF may perform operations such as creating/updating/deleting URRs during the N4 session creation or N4 session modification process with UPF. The detailed operation of SMF's interaction with UPF and the messages being trasnmitted can be found in TS 23.502 V16.6.0, section 4.4, and TS 29.244 V16.6.0, section 7.5.

The behavior of the N4 Session Modification Procedure can be found in section 4.4.1.3 of TS 23.502 V16.6.0.
- The IEs included in N4 Session Modification can be found in section 7.5.4 of TS 29.244 V16.6.0. These IEs may include Update PDR, Create PDR, Update URR, Create URR, etc.

The behavior of the N4 Session Release Procedure can be found in section 4.4.1.4 of TS 23.502 V16.6.0.
- The IEs included in the N4 Session Release Response can be found in section 7.5.7 of TS 29.244 V16.6.0. These IEs may include the Usage Report.

The behavior of the N4 Session Level Reporting Procedure can be found in section 4.4.2.2 of TS 23.502 V16.6.0.
- The IEs included in the N4 Session Report message can be found in section 7.5.8 of TS 29.244 V16.6.0. These IEs may include the Usage Report.

The UUAA re-authentication process may fail. In this case, if the result/response message sent by the USS does not include an "indication (or indication) of whether network resources related to the UAS service can be released in case of UUAA failure", the UAV may be able to communicate with the USS via the PDU session and communicate C2 with the USS, even if the UUAA is failed, until the PDU session is later released due to UUAA revocation. Note that the USS may transmit result/response messages to the AMF and/or SMF.

For the existing Secondary Authentication behavior (see Section 4.3.2.3 "Secondary authorization/authentication by an DN-AAA server during the PDU Session establishment" in TS 23.502 V16.6.0), the PDU Session may be released immediately if re-authentication fails. However, in the case of API-based Secondary authentication, a behavior has been added to keep the PDU session even if re-authentication fails. In this case, if re-authentication fails, the resources of the PDU session may be used until the revocation of authentication occurs. In other words, DL/UL traffic may be sent through this PDU session. The time for the USS to revoke Authentication may vary depending on the policy/implementation of the USS.

To receive connectivity services from the network, the UAV performs a USS UAV Authorization/Authentication (UUAA) authentication procedure through API-based Secondary authentication. This authentication process can be performed by the AMF (UUAA-MM) at the time the UAV registers with the network, or by the SMF (UUAA-SM) when creating a PDU Session for the UAS service.

The UAS Service Supplier (USS) may initiate the Re-authentication process through the UAS NF at any time after the end of the UUAA procedure. After the UUAA re-authentication process fails, if the result/response message sent by the USS does not include "indication of whether the network resources related to the UAS service can be released upon UUAA failure", the UAV may communicate and C2 communication with the USS via PDU session, even if the UUAA is failed, until the PDU session is later released due to UUAA revocation. This is because if the UAV's communication is immediately disconnected after the re-authentication fails, it may cause an accident such as the UAV crashing. Therefore, the USS can maintain the UAV's network resources to prevent accidents even if the re-authentication fails.

In the case of traditional Secondary Authentication behavior, the PDU session is released immediately when re-authentication fails. However, in the case of API-based Secondary authentication, the PDU session can be maintained even if re-authentication fails in this way. In this case, the resources of the PDU session can be used to send DL/UL traffic while re-authentication fails until the authentication is revoked. Conventional UPF knows the usage of the entire PDU session, but does not konw the time when the reauthentication fails. Therefore, the network resource usage (the usage of DL/UL data traffic of the PDU session) from the time when the reauthentication fails until the PDU session is released is unknown. To solve this problem, additional operation is required for the existing SMF behavior. For example, UPF does not know the usage of network resources during the period after a failed reauthentication until the PDU session is released, so the charging (or billing) for this period (from failed reauthentication to PDU session release) is unclear.

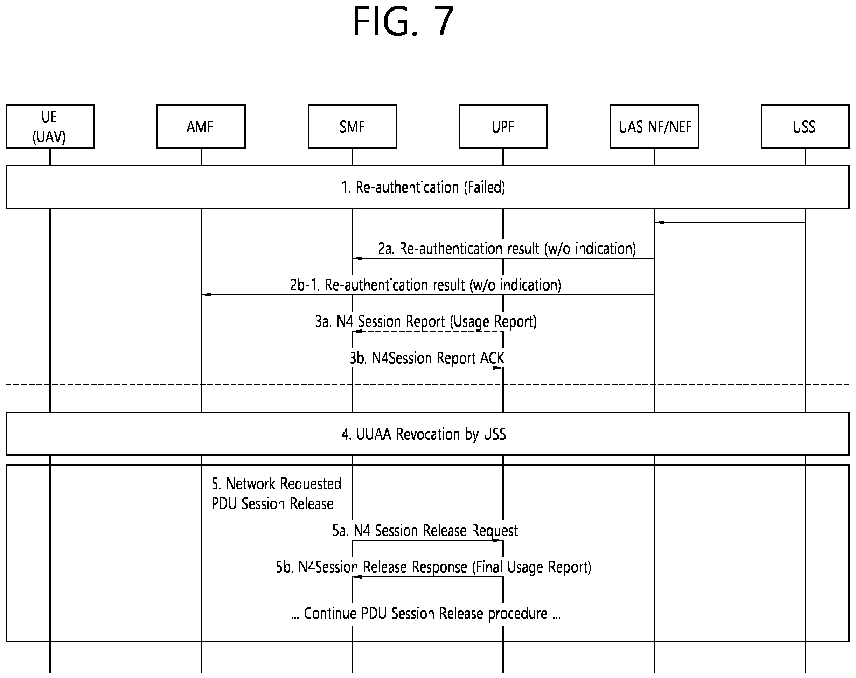

The problems of the prior art will be more specifically described below with reference to the example of FIG. 7.

The following drawings are intended to illustrate specific embodiments of the present disclosure. The designations of specific devices or the designations of specific signals/messages/fields shown in the drawings are for illustrative purposes only, and the technical features of the present disclosure are not limited to the specific designations used in the drawings below.

**FIG. 7** **illustrates an example of conventional operation in the event of a failed re-authentication process.**

If the UUAA re-authentication process fails and the result/response message sent by the USS does not include "indication (or indication) of whether network resources related to the UAS service can be released upon UUAA failure", the procedure is as shown in the example in Fig. 7.

The example in FIG. 7 illustrates one example of a conventional procedure when UUAA Re-authentication fails and the AMF/SMF has not received an "indication (or indication) of whether network resources related to the UAS service may be released upon UUAA failure".
1) The re-authentication process may fail.
2a and/or 2b-1) The USS may transmit a result message of the re-authentication procedure to the SMF and/or AMF. In the example of FIG. 7, "indication" may mean "an indication of whether network resources related to the UAS service may be released upon UUAA failure". In the example of FIG. 7, the result/response message sent by the USS does not include an "indication of whether network resources related to the UAS service may be released upon UUAA failure".
3a and 3b) The UPF may transmit N4 Session Reporting messages to the SMF that include usage reporting. The SMF may transmit an N4 Session Reporting ACK message to the UPF. Even if Re-authentication fails as shown in the example in FIG. 7, the PDU Session may be maintained until the PDU Session release due to UUAA Revocation occurs. During this time, if there is a PDR and URR for the PDU Session, the Usage Report based on the PDR and URR may be forwarded from the UPF to the SMF.
4) The UUAA revocation process may be performed by the USS.
5) The Network Requested PDU Session Release procedure may be performed. During the Network Requested PDU Session Release procedure, during the N4 Session Release process, the UPF may transmit an N4 Session Release Response message including the Final Usage Report for the URR to the SMF.

Network resources during the time when UUAA re-authentication fails (e.g., after it fails) may be provided for the stability and location tracking of unauthorized UAVs due to UUAA failure. Network operators may need to monitor network resource usage and obtain network resource usage statistics during such time (e.g., after re-authentication fails) to inform billing(or charging) policy decisions for such services and the deployment/expansion of network equipment for such services. Billing(or charging) policy decisions may mean, for example, that the network operator charges differently or does not charge for network resources or services provided during the time when when UUAA re-authentication is unsuccessful comapared to the time when UUAA authentication/re-authentication is successful.

However, currently, UPF may know the total usage of a PDU session, but the UPF cannot know when the reauthentication fails. Therefore, there are problems that the UPF cannot know the network resource usage (the usage of DL/UL data traffic of a PDU session) from the time when the reauthentication fails until the PDU session is released. To solve this problem, additional operations need to be discussed for the existing network operations (e.g., SMF operations).

The present disclosure, described below, proposes a method to solve these probelems.

### III. The present disclosure

The present disclosures described herein may be implemented in one or more combinations, such as combinations comprising at least one of those described below. While each of the figures illustrates an embodiment of each disclosure, embodiments of the figures may be implemented in combination with each other.

The description of the methods proposed in the present disclosure may comprise any combination of one or more of the actions/compositions/steps described below. The following methods described below may be performed or used combinatorially or complementarily.

In the present disclosure, the following methods are disclosed to address the various problems described above. The following methods may be performed or used combinatorially or complementarily.

Various examples of the disclosure describe an arrangement for measuring DL/UL traffic used by a UAV for USS/C2 communication in the state of failed UUAA re-authentication.

A usage report of a PDU session for which API-based secondary authentication/authorization failed, according to various examples disclosed herein, may comprise any combination of one or more of the actions/configurations/steps described below.

The operations related to usage report of a PDU session for which API-based secondary authentication/authorization failed as described in the present disclosure may be initiated in the following example situations. For example, there may be USS communications and/or C2 communications that are in normal use due to successful API-based secondary authentication/authorization. For PDU session/PDN Connection for such USS communication and/or C2 communication, re-authentication by USS occurs and if re-authentication fails, the SMF may initiate usage report related actions. If the UUAA process is performed by the AMF at the time of 5GS registration (UUAA-MM), the SMF may receive a message from the AMF that the UUAA re-authentication has failed, and after the SMF receives this message, the SMF may perform the same actions related to the usage report.

As previously mentioned in "II. Techniques and Procedures Related to the present disclosure", the PDU Session/PDN Connection for USS and C2 communications in the present disclosure may be used in common or separately. In the case of separate use, each PDU Session/PDN Connection may be distinguished by a separate DNN/S-NSSAI (APN in the case of EPS). In this case, UPF can measure usage information at the granularity of each PDU Session/PDN Connection level. In case of common use of PDU Session/PDN Connection, the UPF may perform the measurement by distinguishing USS communication traffic and C2 communication traffic as flows with PDR.

In various examples of the present disclosure, a UAS service-related PDU session may also be interpreted as a PDU session for USS communications and/or a PDU session for C2 communications.

In the various examples of the present disclosure, the terms user equipment (UE), terminal, and uncrewed aerial vehicle (UAV) may all be used interchangeably.

In various examples of the present disclosure, a reauthentication process of a UE may be interpreted as a reauthorization process, or a reauthentication and reauthorization process.

In the following, we focus on what is newly proposed in the various examples of the present disclosure, as opposed to the prior art. For UUAA related behavior and procedures, TS 23.256 V17.0.0 is the primary reference. For N4 Session behavior and procedures between UPF and SMF, TS 23.502 V16.6.0 is the primary reference. For the messages used in the N4 Session procedure, see TS 29.244 V16.6.0.

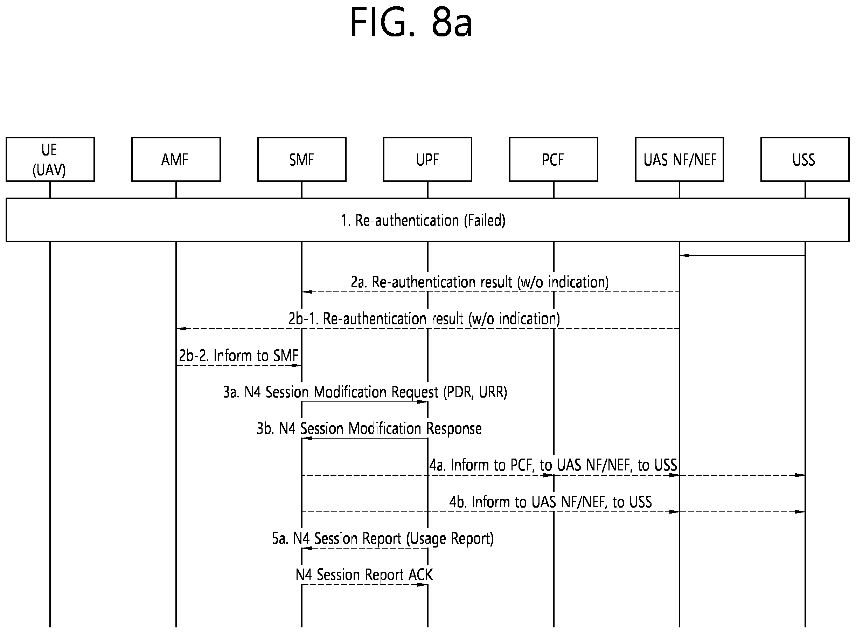

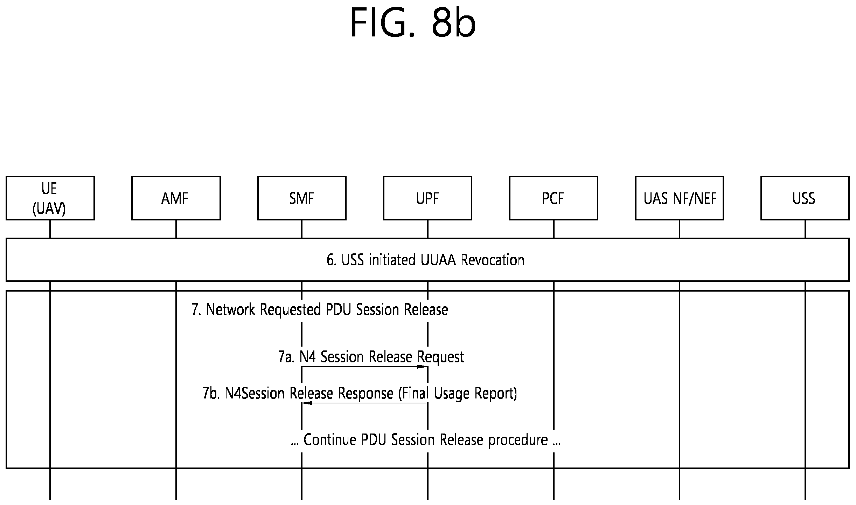

In the following, one example of a procedure to be described in various examples of the present disclosure will be described with reference to FIGS. 8a and 8b.

The following drawings are intended to illustrate specific embodiments of the present disclosure. The designations of specific devices or the designations of specific signals/messages/fields shown in the drawings are for illustrative purposes only, and the technical features of the present disclosure are not limited to the specific designations used in the drawings below.

### FIGS. 8a and 8b illustrate an example of a procedure according to one embodiment of the present disclosure.

If the UUAA re-authentication process fails and the result/response message sent by the USS does not include an "indication (or indication) of whether network resources related to the UAS service may be released upon UUAA failure", the procedure according to one embodiment of the disclosure is as shown in the examples of FIGS. 8a and 8b.

The examples in FIG. 8a and FIG. 8b illustrate an example procedure that includes actions that are performed when UUAA Re-authentication fails and the AMF/SMF does not receive an "indication of whether network resources related to the UAS service may be released upon UUAA failure".

Referring now to the examples of FIGS. 8A and 8B, in accordance with various embodiments of the disclosure, the steps 2b-2, 3a, 3b, 4a, and 4b may be added, as opposed to the example of FIG. 7, which is conventional operation. In the examples of FIGS. 8a and 8b, Steps 3a and 3b may always be performed. In the examples of FIGS. 8a and 8b, 2b-2 may additionally be performed when a UUAA-MM has been performed, and 4a and 4b may additionally be performed when requested by the USS or PCF.
1) The re-authentication process may fail.
2a and/or 2b-1) The USS may transmit the result message of the re-authentication procedure to the SMF and/or AMF. In the examples of FIGS. 8a and 8b, "indication" may mean "an indication of whether network resources related to the UAS service may be released upon UUAA failure". In the examples of FIGS. 8a and 8b, the result/response message sent by the USS may not include an "indication of whether network resources associated with the UAS service may be released upon UUAA failure". For example, the SMF or the AMF may determine that the UUAA re-authentication fails and that the fail message does not include an "indication (or indication of whether network resources related to the UAS service may be released upon UUAA failure". For example, step 2a may refer to behavior according to the UUAA-SM case where the SMF performs UUAA, and step 2b-1 may refer to operations according to the UUAA-MM case where the AMF performs UUAA.
2b-2) As shown in step 2b-1, the AMF may transmit information about UUAA re-authentication failure to the SMF. For example, in the case of UUAA-MM, the AMF may transmit the SMF a message to request a usage report from the AMF to the SMF. For step 2b-1 and step 2b-2, the operationg according to the second example of the present disclosure described below may be applied.
3a) The SMF may transmit an N4 Session Modification Request message to the UPF. The N4 Session Modification Request message may contain PDR, URR. For example, the SMF may transmit a message (e.g., an N4 Session Modification Request message) instructing the UPF to report the usage of the PDU Session related to the UAS service to the UPF. Of note, for step 3a, the operaton of Example 1-1 of the present disclosure described below may be applied.
   The N4 Session Modification Request message may include messages indicating usage reports, including PDR generation/update and/or URR generation/update. The N4 Session Modification Request message may include a PDR and a URR. For PDRs and URRs, the SMF may perform the actions shown in the examples below:
   - PDR: Create a PDR for USS communication if the PDR for the USS communication does not exist
   - URR:
      i) The SMF generates a new URR to generate additional usage reports; or
      ii) The SMF may set the monitoring time with the URR renewal. Accordingly, UPF may generate usage reports separated by specific time; or
      iii) The SMF may generate a new IE with the URR renewal that directs the generation of additional usage reports. As a result, if UPF receives such an IE, it can generate additional usage reports from the time it receives it.
3b) UPF may transmit an N4 session modification response message to the SMF.
4a) The SMF may notify the PCF, UAS NF/NEF, and/or USS. For example, the SMF may notify the PCF or UAS NF/NEF that the UUAA reauth fails and/or that it has instructed the UPF to report usage thereof. Of note, for steps 4a and 4b, the behavior of Examples 1-2 of the present disclosure described below may be applied.
4b) The SMF may notify the UAS NF/NEF and/or USS.
5a and/or 5b) The UPF may transmit N4 session reporting messages including usage reporting to the SMF. The UPF may collect/measure UL/DL traffic by filtering UL/DL traffic based on the PDRs and URRs generated by the SMF. For example, UPF may filter and collect/measure UL/DL traffic based on the PDR/URR received from the SMF. UPF may forward usage reports to SMF based on URRs. The operation of the UPF collecting/measuring UL/DL traffic may be described in Example 1-3 of the present disclosure, described below. The SMF may transmit an N4 session report ACK message to the UPF. As in the examples of FIGS. 8a and 8b, even if Re-authentication fails, the PDU Session may be maintained until a PDU Session release due to UUAA Revocation occurs. During this time, if there is a PDR and URR for the PDU Session, the Usage Report by PDR and URR may be delivered from the UPF to the SMF.
6) The UUAA revocation process initiated by the USS may be performed.
7) The Network Requested PDU Session Release procedure may be performed. When the USS revokes the UUAA, the SMF may release the PDU Session. For the release of the PDU Session, the description of Examples 1-4 of the present disclosure described below may be applied.
7a) The SMF may transmit an N4 session release request message to the UPF.
7b) The UPF may transmit an N4 Session Release Response message to the SMF containing the Final Usage Report information. For step 7b, the descriptions of Example 1-5 of the present disclosure described below may be applied.

During the Network Requested PDU Session Release procedure, during the N4 Session Release process, the UPF may transmit an N4 Session Release Response message including a Final Usage Report for the URR to the SMF.

In the PDU Session Release procedure, the UPF may receive an N4 Session Release Request from the SMF. When UPF transmits the N4 Session Release Response, which is a response to the N4 Session Release Request, the UPF may include a Final Usage Report for the URR (information about the traffic collected/measured during the UUAA revocation and release after the UUAA re-auth failed) in the N4 Session Release Response.

In other words, the SMF may obtain a Usage Report on how much network resources the UAV used in a UUAA fail state.

Hereinafter, the present disclosure will be described with reference to the first example through the third example of the present disclosure. The first example through the third example the present disclosure described herein may be implemented in combination. As a point of reference, the third example of the disclosure may represent a specific embodiment based on a combination of at least one of the first and second examples of the present disclosure.

### 1. The first example of the present disclosure

The first example of the present disclosure describes a method for an SMF to obtain a usage report of a UAS service-related PDU session when UUAA re-authentication fails.

### 1-1. Example 1-1 of the present disclosure

According to Example 1-1 in the present disclosure, if the UUAA fail message does not include "an indication of whether the UAS service related network resources may be released upon UUAA failure", the SMF may transmit a message (e.g., N4 Session Modification Request) instructing the UPF to report the usage of the UAS service related PDU Session to the UPF.

As a result of the UUAA re-authentication being performed, the SMF may check the UUAA fail. In this case, the UUAA result message (e.g., step 2a of FIGS. 8a and 8b) may not include an "indication of whether the UAS service related network resources may be released upon UUAA failure". Then, the SMF may transmit a message (e.g., N4 Session Modification Request) instructing the UPF to provide a usage report for the UAS service-related PDU Session without releasing the UAS-related resources, to the UPF. This message may include a PDR and a URR to obtain a usage report of UL/DL traffic used after a UUAA re-authentication failure. The SMF may use the PDR to set how the UPF filters packets for USS and C2 communications. The SMF may also use the URR included in the PDR to configure how UPF measures the filtered packets and reports the usage report.

If the PDU session for USS and C2 communications uses the same PDU Session, UPF may use PDR to measure USS and C2 communications traffic as different flows. Note that the description of Packet Filter Set in clause 5.7.5 of TS 23.501 V16.9.0 may apply.

If different PDU sessions are used for USS and C2 communications, the UPF may measure the usage of the PDU session for USS communications and the usage of the PDU session for C2 communications separately. In this case, the SMF may transmit a message instructing the UPF to report the usage for each of the different PDU sessions, to the UPF. Here, the UPFs may be the same UPF or different UPFs for different PDU Sessions.

The N4 Session Modification Request message may be transmitted in the following cases as examples.
i) For PDR renewal and URR generation, an N4 Session Modification Request message may be sent (if the UPF already has a PDR that filters USS and C2 communications):
   - An N4 Session Modification Request may include an Update PDR IE and a Create URR IE.
   - Create URR: The SMF may generate a URR for the UL/DL usage report and assign a URR ID.
   - Update PDR: The SMF may add the generated URR ID to the URR ID list of the PDR that is filtering USS and C2 communication traffic.
ii) For URR renewal, an N4 Session Modification Request message may be sent (if the UPF already has a PDR that filters USS and C2 communications and a URR that measures USS and C2 communications traffic on that PDR):
   - An N4 Session Modification Request may innclude an Update URR IE.
   - By setting the Monitoring Time in the Update URR IE, the SMF may cause UPF to generate a separate Usage Report based on the monitoring time. In this case, the SMF may set the monitoring time to the time when it realizes that a UUAA fail has occurred. (Or the SMF may set it to the time when you perform N4 Session Modification).
   - UPF may generate a separate Usage Report from a point in time based on the monitoring time.
   - For UUAA-MM, the SMF may set the monitoring time to the received value if the SMF has received a monitoring time value from the AMF based on the second example of the present disclosure below. If the SMF has not received the monitoring time value from the AMF, the SMF may set the monitoring time value based on when the SMF receives the following information from the AMF, based on the second example of the beginning of the present disclosure
   - Information that indicates UUAA or UUAA re-authentication failed
   - Information about when UUAA or UUAA re-authentication failed
   - Information that instructs network resources related to the UAS service not to be released or to be maintained.
   - Information to instruct UPF to report usage for PDU sessions related to UAS services
   - An indication of whether network resources related to the UAS service may be released upon UUAA failure, or information indicating that such an indication was not provided by the USS.
iii) For URR renewal, an N4 Session Modification Request message may be sent (if the UPF already has a PDR that filters USS and C2 communications and a URR that measures USS and C2 communications traffic on that PDR):
   - An N4 Session Modification Request may include an Update URR IE.
   - The SMF may generate a new IE within the Update URR IE that directs the generation of additional usage reporting. If UPF receives said new IE for the same URR, it may generate additional usage reporting from the time of receipt (e.g., when re-authentication failed).
   - The SMF may receive additional usage reports from a UPF by using a new IE that directs the generation of additional usage reports for the same URR. In this case, when selecting a UPF, the SMF may consider selecting a UPF that supports the new IE attribute.
iv) To generate PDRs and URRs, N4 Session Modification Request messages may be sent (if UPF does not have PDRs to filter USS and C2 communications and URRs to measure USS and C2 communications traffic):
   - An N4 Session Modification Request may include a Create PDR and a Create URR IE.
   - Create URR: The SMF may create a URR for the UL/DL usage report and assign a URR ID.
   - Create PDR: The SMF may create PDRs to filter USS and C2 communication traffic. The SMF can add the created URR ID to the URR ID List of the created PDR.

In addition to examples i) through iv) described above, even if there are PDRs in use that filter USS and C2 communication packets, the SMF may wish to filter UAS service traffic in other ways as needed (e.g., filtering by specific ports, IP addresses, etc.). In such cases, the SMF can create a new PDR.

The operation of the SMF transmitting a message instructing the UPF to report usage for a UAS service related PDU session to the UPF may always be performed. The SMF may transmit a message directing a usage report based on various information (e.g., local configuration set in the SMF, operator policy, subscriber information related to the UE, if the USS has requested a usage report, if the PCF has requested a usage report, etc.). The local configuration set in the SMF may include the configuration for the DNN/S-NSSAI of the PDU Session used for the UAS service.

### 1-2. Example 1-2 of the present disclosure

In accordance with Example 1-2 in the present disclosure, the SMF may (or may notify) the PCF, USS, and/or UAS NF/NEF of information about the UUAA re-authentication failure and/or that the SMF has instructed the UPF to report usage based on the UUAA re-authentication failure.

The USS, through the UAS NF/NEF, may subscribe to a notification service that provides information about a UUAA re-authentication failure and/or information that it has instructed the UPF to report usage based on a UUAA re-authentication failure. The UAS NF/NEF may subscribe to the notification service of the SMF or PCF to support such notification service. The UAS NF/NEF may then receive notifications from the SMF or PCF and forward the notifications to the USS. If the UAS NF/NEF subscribes to a PCF, the PCF may subscribe to the SMF's notification service to receive notifications from the SMF. The PCF then forwards the notification to the UAS NF/NEF, UAS NF/NEF forwards the notification to the USS.

As described in Example 1-1 in the present disclosure, the SMF may instruct the UPF to report additional usage through the generation/update of PDRs and URRs after a UUAA re-authentication failure. After the SMF instructs the UPF to report the usage report, the SMF may notify PCFs or UAS NFs/NEFs that have subscribed to the SMF's notification service that it has instructed the UPF to report the usage report. For example, the following actions may occur:
- If the SMF has forwarded the notification to the PCF, the PCF may forward the notification to the USS via the UAS NF/NEF.
- If the SMF has forwarded the notification to the UAS NF/NEF, the UAS NF/NEF may forward the notification to the USS.

Even if the USS does not request to subscribe to the above notification services, the PCF or UAS NF/NEF may request the SMF to subscribe to the above notification services in order to be notified of the information that it has provided (e.g., information about UUAA re-authentication failures and/or information that it has instructed the UPF to report usage based on UUAA re-authentication failures).

The PCF may receive a notification related to information about the UUAA re-authentication failure and/or information that the PCF has instructed the UPF to report usage based on the UUAA re-authentication failure from the SMF. After the PCF receives the notification, but before or after the PCF forwards the notification to the USS via the UAS NF/NEF, the PCF may make additional policy updates. Since the PCF is not directly aware of the re-authentication fail situation (e.g., only allowing limited C2 communication or only allowing limited traffic for C2 and Tracking), it may update the necessary policies upon receiving notification from the SMF. Here, the required policies may be preset by the USS to apply in such situations. The PCF may communicate the updated policy to the SMF. For example, the PCF may transfer the updated policy to the SMF via the Npcf_SMPolicyControl_UpdateNotify request described in the PCF initiated SM Policy Association Modification process in section 4.16.5.2 of TS 23.502 V16.6.0.

### 1-3. Example 1-3 of the present disclosure

According to Examples 1-3 of the present disclosure, based on the PDRs and URRs generated by the SMF, the UPF may filter UL/DL traffic to collect/measure. For example, based on the PDR and URR generated by the SMF, the UPF may filter UL/DL traffic and may collect and/or measure the filtered traffic.

Based on the usage report instruction received from the SMF (e.g., N4 Session Modification in Example 1-1 of the present disclosure), the UPF may filter the UL/DL traffic used for USS/C2 communication and collect/measure the usage according to the generated/updated PDR/URR. Based on the new URR, the UPF may generate additional usage reports for USS/C2 communication in addition to the existing usage reports. The UPF may also transfer usage reports to the SMF periodically or based on data volume, based on the value of the Usage Report Trigger field. The SMF may store the cumulative value of usage based on the usage reports received from the UPF.

### 1-4. Example 1-4 of the present disclosure

According to the opening example 1-4 of the present disclosure, when the USS revokes the UUAA, the SMF may release the PDU Session.

The UUAA revoke behavior and procedure is described in clause 5.2.7 of 3GPP TS 23.256 V17.0.0.

Due to the UUAA revoke operation, a PDU Session Release may be initiated. The PDU Session Release operation and procedure is described in section 4.3.4 of TS 23.502 V16.6.0.

### 1-5. Example 1-5 of the present disclosure

According to Example 1-5 of the present disclosure, in the PDU Session release procedure, the UPF may receive an N4 Session Release Request message from the SMF. When the UPF transmits an N4 Session Release Response, which is a response to the N4 Session Release Request, to the SMF, the UPF may include a Usage Report in the N4 Session Release Response message.

During the PDU Session Release procedure, the SMF may perform the N4 Session Release procedure to terminate the N4 session with the UPF. The SMF sends an N4 Session Release Request message to the UPF, and the UPF may respond by transmitting an N4 Session Release Response message to the SMF. At this time, the UPF may include the Final Usage Report for URR in the Response message, and may also include the Final Usage Report for USS and C2 communication traffic in the Response message. If the URR is removed by N4 Session Release, the Final Usage Report (e.g., see step 7b in FIG. 8a and FIG. 8b) may include information about the usage since the UPF last sent a usage report to the SMF. The UPF may transmit a Final Usage Report to the SMF that includes a Usage Report Trigger set to Termination Report (TERMR).

Based on the usage reports received from UPF, SMF nay accumulate usage information. As a result, the SMF can obtain a usage report of the amount of network resources used from the time UUAA re-authentication fails until the PDU Session is released, i.e., the amount of network resources used while UUAA fails.

The association between an SMF and a UPF node may be released for reasons such as network Operation Administration Maintenance (OAM). In this case, the Enhanced PFCP Association Release feature (EPFAR) can be supported to forward usage reports remaining in the UPF to the SMF. In order for the SMF to receive usage reports from the UPF using this attribute, the SMF might consider selecting a UPF that supports the EPFAR attribute when selecting a UPF.

### 2. Second example of the present disclosure

The second example of the present disclosure describes how, when UUAA re-authentication is performed via an AMF, the AMF transmits information about the failure of UUAA re-authentication to the SMF upon failure of UUAA re-authentication.

If UUAA-MM is performed, i.e., UUAA re-authentication is performed through the AMF, the SMF is not informed about the outcome of the UUAA and "an indication of whether network resources related to the UAS service may be released in the event of a UUAA failure".

If UUAA-MM is performed, if the UUAA re-authentication fails and the UUAA result/response sent by the USS does not include an "indication of whether the UAS service related network resources may be released upon UUAA failure", the AMF may transmit one or more of the following information to the SMF. Note that the AMF may receive a Re-authentication result message from the UAS NF/NEF in step 2b-1 of the example in FIGS. 8a and 8b, which may not have an "indication of whether network resources associated with the UAS service may be released upon UUAA failure". Information such as the following example transmitted by the AMF may be transmitted explicitly or implicitly. In addition, much of the information may be transmitted implicitly:
- Information that indicates UUAA or UUAA re-authentication failed
- Information about time when UUAA or UUAA re-authentication failed
- Information that directs network resources related to the UAS service not to be released or to be maintained.
- Information to instruct UPF to report usage report for PDU sessions related to UAS services
- An indication of whether network resources related to the UAS service may be released upon UUAA failure, or information indicating that such an indication was not provided by the USS.

In order for AMF to send information like the example above to SMF, AMF may use extended existing messages (e.g., Nsmf_PDUSession _UpdateSMContext). Alternatively, AMF may use newly defined messages. Alternatively, the AMF may operate a notification service that notifies it when UUAA re-authentication fails. Accordingly, when the SMF establishes a PDU Session to the UE's UAS service, the SMF may subscribe to the AMF's notification service. In case of UUAA re-authentication failure, the AMF may notify the SMF with information about the UUAA re-authentication failure. At that time, the AMF may provide the SMF with one or more of the above information according to the various examples described above.

Based on the above one or more information received from the AMF, the SMF may determine to perform one or more of the actions described in the first example of the present disclosure. In this case, instead of the SMF checking whether the UUAA fail message includes "an indication of whether network resources related to the UAS service may be released upon UUAA failure" as described in Example 1-1 of the present disclosure, the SMF may check the information provided by the AMF. By checking the information provided by the AMF, the SMF may determine that the SMF should obtain a usage report of the PDU Session related to the UAS service. Accordingly, the SMF may perform one or more of the actions described in the first example of the present disclosure.

In other words, the description according to the second example of the present disclosure can be applied to steps 2b-1 and 2b-2 of the example of FIG. 8a and FIG. 8b. After performing steps 2b-1 and 2b-2, the SMF may perform step 3a and subsequent operations of the example of FIG. 8a and FIG. 8b.

### 3. Third example of the present disclosure

The third example of the present disclosure may represent a specific embodiment based on a combination of at least one of the first and second examples of the present disclosure.

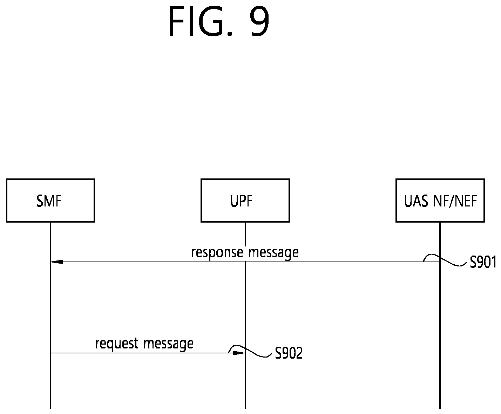

Hereinafter, with reference to FIG. 9, the operation of various examples of the present disclosure will be described.

The following drawings are intended to illustrate specific embodiments of the present disclosure. The designations of specific devices or the designations of specific signals/messages/fields shown in the drawings are for illustrative purposes only, and the technical features of the present disclosure are not limited to the specific designations used in the drawings below.

**FIG. 9** **illustrates an example of a procedure according to the third example of the present disclosure.**

The example of FIG. 9 illustrates one example of the operation of a terminal (e.g., UE (UAV)) and/or a network (e.g., AMF, SMF, UPF, UAS NF/NEF, USS, etc.) in accordance with various examples of the presentdisclosure described above. Note that the operations of the terminal and/or the behavior of the network illustrated in the example of FIG. 9 are illustrative only, and the scope of the present disclosure is not limited by what is illustrated in the example of FIG. 9. For example, the terminal and/or network may perform the operations previously described in the examples of FIGS. 8a and 8b, and the first or second examples of the present disclosure, even if not illustrated in the example of FIG. 9.

Note that in the example of FIG. 9, only SMF, UPF, and UAS NF/NEF are shown, but this is for illustrative purposes only. For example, the UE (UAV), AMF, USS, etc. described in various examples herein may also perform the operations described in the example of FIG. 9.

In step S901, the UAS NF/NEF may transmit a response message to the SMF comprising information about the result of the re-authentication. For example, the response message may be a response message containing information about the result that the UUAA re-authentication failed. The response message may not include information about whether the network resources associated with the UAS service may be released.

Note that in the example of FIG. 9, the SMF receives the result message directly from the UAS NF/NEF, but this is illustrative only. As previously described in various examples, after the AMF receives the result message from the UAS NF/NEF, the AMF may transmit the result message to the SMF. In other words, step S901 may be replaced by an operation of the AMF transmitting the result message to the SMF.

In step S902, the SMF may transmit a request message to the UPF. For example, the SMF may transmit the request message based on the fact that the response message does not include information about whether the network resources associated with the UAS service should be released. To obtain information about the usage of traffic associated with the PDU session after a failed UUAA re-authentication, the SMF may transmit a request message to the UPF.

The request message may include a PDR and a URR for obtaining information about the usage of traffic associated with said PDU session after said UUAA re-authentication fails. Upon receiving the request message, the UPF may, based on the PDR and URR included in the request message, filter the traffic associated with said PDU session after said UUAA re-authentication fails, and measure the filtered traffic. The UPF may generate a usage report based on the measured traffic, and may transmit the generated usage report to the SMF.

As described in one embodiment of the present disclosure, the SMF may determine whether the result of a failed UUAA re-authentication performed by the UE and USS includes an "indication of whether network resources associated with the UAS service may be released upon the UUAA failure." For example, the SMF may receive from the network a fail message of UUAA-SM re-authentication resulting from the network performing UUAA-SM. If the fail message does not include an "indication (or indication) of whether network resources related to the UAS service may be released upon UUAA failure", the SMF may recognize that additional usage reports are required.

As described in one embodiment of the present disclosure, if the UUAA fail message does not include an "indication of whether the UAS service related network resources may be released upon UUAA failure", the SMF may transmit an N4 Session Modification Request to the UPF for a Usage Report of the UAS service related PDU Session. For example, the SMF may generate a new URR via an N4 Session Modification Request. Then, the SMF may add the generated URR to a new PDR, an existing PDR, or renew an existing URR to instruct the UPF to collect/measure the UL/DL traffic of the USS and C2 communications. For example, if there is no PDR for filtering USS and C2 traffic, the SMF may create a PDR for this purpose and add the created or updated URR to the PDR's URR List. For example, if a PDR that filters USS and C2 communications traffic is in use, the SMF may update the PDR in use and add the created or updated URR to the PDR's URR ID List. For example, the SMF may create a new PDR for the UAS service traffic and add the created or renewed URR to it, as needed. For example, if the SMF wants to receive a Usage Report until the PDU Session is released, the SMF can set the required value (periodicity, data volume, etc.) in the Usage Report Trigger field.

As described in one embodiment of the present disclosure, the SMF may check the result of a UUAA re-authentication fail performed by the UE with the USS. When checking this result, the SMF may determine that the result message includes an "indication of whether network resources associated with the UAS service may be released upon UUAA failure". If there is no such "indication" in the UUAA fail message, the SMF may transmit an N4 Session Modification Request including the PDR and URR to the UPF for a Usage Report of the UAS service related PDU Session. The SMF may notify the PCF that it has instructed the usage report at the request of the PCF (or at the request of the PCF at the request of the USS). The UPF may collect/measure UL/DL traffic until the PDU Session release due to UUAA revocation according to the URR generated by the SMF. In the case of UUAA-MM, the AMF may transmit a message to the SMF to request a usage report.

As described in one embodiment of the disclosure, the SMF may notify the PCF or UAS NF/NEF that a UUAA re-authentication fails and/or that it has instructed the UPF to report usage. The action of the SMF performing the notification may be due to a request for notification services from the USS to the UAS NF/NEF. For example:
- The UAS NF/NEF can subscribe to the PCF's notification service, and the PCF can subscribe to the SMF's notification service. This allows the SMF to notify the USS via the PCF and the UAS NF/NEF. Or,
- The UAS NF/NEF can subscribe to the SMF's notification service. This allows the SMF to notify the USS via the UAS NF/NEF.

Alternatively, even if the USS does not subscribe to the Notification Service, the PCF or UAS NF/NEF may request that the SMF subscribe to the Notification Service if the PCF or the UAS NF/NEF wishes to be notified of the above information.

As described in one embodiment of the disclosure, the UPF may collect/measure UL/DL traffic in accordance with a URR generated by the SMF. Based on the PDR and URR generated by the SMF, the UPF may collect and/or measure USS and C2 communication traffic and transmit a Usage Report to the SMF.

As described in the opening embodiment of this disclosure, when the USS revokes the UUAA, the SMF may release the PDU Session associated with the UAS service.

As described in one embodiment of the present disclosure, during the PDU Session Release procedure, when the UPF sends an N4 Session Release Response (e.g., a message in response to an N4 Session Release Request received from the SMF), the UPF may include a Usage Report in the N4 Session Release Response. For example, the UPF may transmit a Final Usage Report for PDRs and URRs generated by the SMF. This report may include information about the usage since the UPF sent the last usage report to the SMF. The SMF may accumulate the usage information it receives from the UPF. As a result, the SMF may collect/measure the traffic used from the time UUAA re-authentication fails until the PDU session is released by UUAA revoke.

As described in one embodiment of the present disclosure, when UUAA re-authentication is performed via an AMF, the AMF may transmit information to the SMF about a failed UUAA re-authentication. This information may allow the SMF to recognize that an additional usage report is required in 2).

As described in one embodiment of the present disclosure, network resource usage can be checked from the time the UUAA re-authentication fails until the PDU session is released. Even if the UUAA re-authentication fails, the network resources are still used for the stability of the UAV, and the network operator may be able to establish billing policies, deploy/increase network equipment, etc. based on this information about network resource usage.

For reference, the operation of the terminal (e.g., UE, UAV) described in the present disclosure may be implemented by the apparatuses of FIGS. 1 to 4 described above. For example, the terminal (e.g., UE, UAV)) may be the first device 100 or the second device 200 of FIG. 2 . For example, an operation of a terminal (e.g., UE, UAV)) described herein may be processed by one or more processors 102 or 202 . The operation of the terminal described herein may be stored in one or more memories 104 or 204 in the form of an instruction/program (e.g. instruction, executable code) executable by one or more processors 102 or 202 . One or more processors 102 or 202 control one or more memories 104 or 204 and one or more transceivers 105 or 206, execute instructions/programs stored in one or more memories 104 or 204 as disclosed herein, such that the one or more processors 102 or 202 may perform the operation of the UE (e.g., UE) described in the disclosure of the present specification.

In addition, instructions for performing an operation of a terminal (e.g., UE, UAV) described in the disclosure of the present specification may be stored in a non-volatile computer-readable storage medium in which it is recorded. The storage medium may be included in one or more memories 104 or 204 . In addition, the instructions recorded in the storage medium may be executed by one or more processors 102 or 202 to perform operations of a terminal (e.g., UE, UAV) described in the disclosure of the present specification.

For reference, the operation of a network node (e.g., AMF, SMF, UPF, PCF, UAS NF/NEF, USS, etc.) or base station (e.g., NG-RAN, gNB, eNB, RAN, E-UTRAN, etc.) described herein may be implemented by the apparatus of FIGS. 1 to 3 to be described below. For example, a network node or a base station may be the first device 100a of FIG. 1 or the second device 100b of FIG.1. For example, the operation of a network node or base station described herein may be processed by one or more processors 102 or 202. The operation of the terminal described herein may be stored in one or more memories 104 or 204 in the form of an instruction/program (e.g. instruction, executable code) executable by one or more processors 102 or 202. One or more processors 102 or 202 may perform the operation of a network node or a base station described herein, by controlling one or more memories 104 or 204 and one or more transceivers 106 or 206 and executing instructions/programs stored in one or more memories 104 or 204.

In addition, instructions for performing the operation of the network node or base station described in the disclosure of the present disclosure may be stored in a non-volatile (or non-transitory) computer-readable storage medium. The storage medium may be included in one or more memories 104 or 204. And, the instructions recorded in the storage medium are executed by one or more processors 102 or 202, so that the operations of a network node or base station are performed.

In the above, preferred embodiments have been exemplarily described, but the disclosure of the present specification is not limited to such specific embodiments, and thus, modifications, changes, or can be improved.

In the exemplary system described above, the methods are described on the basis of a flowchart as a series of steps or blocks, but are not limited to the order of the steps described, some steps may occur in a different order or concurrent with other steps as described above. In addition, those skilled in the art will understand that the steps shown in the flowchart are not exclusive and that other steps may be included or that one or more steps of the flowchart may be deleted without affecting the scope of rights.

The claims described herein may be combined in various ways. For example, the technical features of the method claims of the present specification may be combined and implemented as an apparatus, and the technical features of the apparatus claims of the present specification may be combined and implemented as a method. In addition, the technical features of the method claim of the present specification and the technical features of the apparatus claim may be combined to be implemented as an apparatus, and the technical features of the method claim of the present specification and the technical features of the apparatus claim may be combined and implemented as a method.

## Claims

1. A method, performed by a Session Management Function, SMF, comprising:
receiving (S901) a response message related to an Uncrewed Aerial Vehicle, UAV, Uncrewed Aerial Systems, UAS, Service Supplier, USS, Authorization/Authentication, UUAA, re-authentication,
wherein the response message includes a UUAA result which is a failure;
transmitting (S902) a request message for requesting a usage report for a Protocol Data Unit, PDU, session related to a UAS service, to a User Plane Function, UPF, based on the response message not including information related to whether network resources related to a UAS service can be released;
wherein the request message includes a Packet Detection Rule, PDR, for distinguishing packets arriving at the UPF, and wherein the PDR includes a Usage Reporting Rule, URR, including information related to method and/or time for measuring the packets;
receiving a usage report from the UPF,
wherein the usage report includes information related to a usage of traffic for the PDU session after the UUAA re-authentication fails;
transmitting an N4 session release request message related to the PDU session to the UPF; and
receiving an N4 session release response message related to the PDU session from the UPF,
wherein the N4 session release response message includes a final usage report for the PDU session.

2. The method of claim 1,
wherein the response message is received (S901) from a UAS Network Function, NF, or a Network Exposure Function, NEF, when the UUAA re-authentication is performed by the SMF.

3. The method of any one of preceding claims,
wherein the response message is received (S901) from an Access and mobility Management Function, AMF, when the UUAA re-authentication is performed the AMF.

4. The method of any one of preceding claims,
wherein the request message is an N4 session modification request message.

5. A Session Management Function, SMF, (100) comprising:
at least one processor (102); and
at least one computer memory (104) operably connectable to the at least one processor (102) and storing instructions that, based on being executed by the at least one processor (102), perform the method of any claims 1 to 5.

6. A method, performed by a User Plane Function, UPF, comprising:
receiving a request message from a Session Management Function, SMF, for requesting a usage report for a Protocol Data Unit, PDU, session related to a Uncrewed Aerial Systems, UAS, service,
wherein the request message includes a Packet Detection Rule, PDR, for distinguishing packets arriving at the UPF, and
wherein the PDR includes a Usage Reporting Rule, URR, including information related to method and/or time for measuring the packets;
measuring a usage of traffic for the PDU session after a UUAA re-authentication fails based on the request message;
transmitting a usage report including information related to the usage of traffic for the PDU session after the UUAA re-authentication fails, to the SMF;
receiving an N4 session release request message related to the PDU session from the SMF; and
transmitting an N4 session release response message related to the PDU session to the SMF,
wherein the N4 session release response message includes a final usage report for the PDU session.

## Patentansprüche

1. Ein Verfahren, das von einer Session Management Function, SMF, durchgeführt wird, umfassend:
Empfangen (S901) einer Antwortnachricht im Zusammenhang mit einer Uncrewed Aerial Vehicle, UAV, eines Uncrewed Aerial Systems, UAS, Service Supplier, USS, Autorisierung/Authentifizierung, UUAA, Wieder-Authentifizierung,
wobei die Antwortnachricht ein UUAA-Ergebnis umfasst, das ein Fehlschlagen darstellt;
Übertragen (S902) einer Anforderungsnachricht zum Anfordern eines Nutzungsberichts für eine Protocol Data Unit, PDU,-Session im Zusammenhang mit einem UAS-Dienst an eine User Plane Function, UPF, basierend darauf, dass die Antwortnachricht keine Information dahingehend umfasst, ob Netzwerkressourcen im Zusammenhang mit einem UAS-Dienst freigegeben werden können;
wobei die Anforderungsnachricht eine Packet Detection Rule, PDR, zum Unterscheiden von Paketen, die an dem UPF ankommen aufweist, und wobei die PDR eine Usage Reporting Rule, URR, einschließlich Informationen aufweist, die sich auf ein Verfahren und/oder eine Zeit zum Messen der Pakete beziehen;
Empfangen eines Nutzungsberichts von der UPF,
wobei der Nutzungsbericht Informationen bezüglich einer Nutzung von Datenverkehr für die PDU-Session nach dem Fehlschlagen der UUAA-Wieder-Authentifizierung umfasst;
Übertragen einer N4-Session-Freigabeanforderungsnachricht im Zusammenhang mit der PDU-Session an die UPF; und
Empfangen einer N4-Session-Freigabeantwortnachricht im Zusammenhang mit der PDU-Session von der UPF,
wobei die N4-Session-Freigabeantwortnachricht einen endgültigen Nutzungsbericht für die PDU-Session umfasst.

2. Das Verfahren nach Anspruch 1,
wobei die Antwortnachricht (S901) von einer UAS Network Function, NF, oder einer Network Exposure Function, NEF, empfangen wird, wenn die UUAA-Wieder-Authentifizierung durch die SMF durchgeführt wird.

3. Das Verfahren nach einem der vorhergehenden Ansprüche,
wobei die Antwortnachricht (S901) von einer Access and Mobility Management Function, AMF, empfangen wird, wenn die UUAA-Wieder-Authentifizierung durch die AMF durchgeführt wird.

4. Das Verfahren nach einem der vorhergehenden Ansprüche,
wobei die Anforderungsnachricht eine N4-Session-Modifikationsanforderungsnachricht ist.

5. Eine Session Management Function, SMF, (100), umfassend:
mindestens einen Prozessor (102); und
mindestens einen Computerspeicher (104), der mit dem mindestens einen Prozessor (102) operativ verbindbar ist und Anweisungen speichert, die bei Ausführung durch den mindestens einen Prozessor (102) das Verfahren nach einem der Ansprüche 1 bis 5 durchführen.

6. Ein Verfahren, das von einer User Plane Function, UPF, durchgeführt wird, umfassend:
Empfangen einer Anforderungsnachricht von einer Session Management Function, SMF, zum Anfordern eines Nutzungsberichts für eine Protocol Data Unit, PDU, -Session im Zusammenhang mit einem Uncrewed Aerial Systems, UAS -Dienst,
wobei die Anforderungsnachricht eine Packet Detection Rule, PDR, zum Unterscheiden von bei der UPF eintreffenden Paketen umfasst, und
wobei die PDR eine Usage Reporting Rule, URR, umfasst, die Informationen bezüglich eines Verfahrens und/oder eines Zeitpunkts zum Messen der Pakete umfasst;
Messen einer Nutzung von Datenverkehr für die PDU-Session nach dem Fehlschlagen einer UUAA-Wieder-Authentifizierung basierend auf der Anforderungsnachricht;
Übertragen eines Nutzungsberichts, der Informationen bezüglich der Nutzung von Datenverkehr für die PDU-Session nach dem Fehlschlagen der UUAA-Wieder-Authentifizierung umfasst, an die SMF;
Empfangen einer N4-Session-Freigabeanforderungsnachricht im Zusammenhang mit der PDU-Session von der SMF; und
Übertragen einer N4-Session-Freigabeantwortnachricht im Zusammenhang mit der PDU-Session an die SMF,
wobei die N4-Session-Freigabeantwortnachricht einen endgültigen Nutzungsbericht für die PDU-Session umfasst.

## Revendications

1. Procédé, exécuté par une fonction de gestion de session, SMF, comprenant:
la réception (S901) d'un message de réponse concernant un aéronef sans pilote, UAV, un système aérien sans pilote, UAS, un fournisseur de services, USS, une autorisation/authentification, UUAA, une réauthentification,
dans lequel le message de réponse comprend un résultat UUAA qui est une défaillance;
la transmission (S902) d'un message de requête visant à demander un rapport d'utilisation pour une session d'unité de données de protocole, PDU, liée à un service UAS, à une fonction de plan utilisateur, UPF, sur la base du message de réponse ne contenant pas d'informations indiquant si les ressources réseau liées à un service UAS peuvent être libérées; dans lequel le message de requête comprend une règle de détection de paquets, PDR, permettant de distinguer les paquets arrivant à l'UPF, et dans lequel la PDR comprend une règle de rapport d'utilisation, URR, incluant des informations relatives à la méthode et/ou au moment de la mesure des paquets;
la réception d'un rapport d'utilisation provenant de l'UPF,
dans lequel le rapport d'utilisation comprend des informations liées à une utilisation du trafic de la session PDU après que la nouvelle authentification UUAA a échoué;
la transmission d'un message de requête de libération de session N4 associé à la session PDU à l'UPF; et
la réception d'un message de réponse de libération de session N4 associé à la session PDU provenant de l'UPF;
dans lequel le message de réponse de libération de session N4 comprend un rapport d'utilisation final pour la session PDU.

2. Procédé selon la revendication 1,
dans lequel le message de réponse est reçu (S901) en provenance d'une fonction réseau UAS, NF, ou d'une fonction d'exposition réseau, NEF, lorsque la réauthentification UUAA est effectuée par la SMF.

3. Procédé selon l'une quelconque des revendications précédentes,
dans lequel le message de réponse est reçu (S901) en provenance d'une fonction de gestion de l'accès et de la mobilité, AMF, lorsque la réauthentification UUAA est effectuée par l'AMF.

4. Procédé selon l'une quelconque des revendications précédentes,
dans lequel le message de requête est un message de requête de modification de session N4.

5. Fonction de gestion de session, SMF, (100) comprenant:
au moins un processeur (102); et
au moins une mémoire informatique (104) pouvant être connectée fonctionnellement à l'au moins un processeur (102) et stockant des instructions qui, lorsqu'elles sont exécutées par l'au moins un processeur (102), mettent en œuvre le procédé selon l'une quelconque des revendications 1 à 5.

6. Procédé, exécuté par une fonction de gestion de session, UPF, comprenant:
la réception d'un message de requête provenant d'une fonction de gestion de session, SMF, visant à demander un rapport d'utilisation pour une session d'unité de données de protocole, PDU, liée à un service de systèmes aériens sans pilote, UAS,
dans lequel le message de requête comprend une règle de détection de paquets, PDR, permettant de distinguer les paquets arrivant à l'UPF, et
dans lequel la PDR comprend une règle de rapport d'utilisation, URR, contenant des informations relatives à la méthode et/ou au moment de la mesure des paquets;
la mesure du trafic généré par la session PDU après l'échec d'une réauthentification UUAA, sur la base du message de requête;
la transmission, à la SMF, d'un rapport d'utilisation comprenant des informations liées à l'utilisation du trafic de la session PDU après que la nouvelle authentification UUAA a échoué;
la réception d'un message de requête de libération de session N4 associé à la session PDU provenant de l'SMF; et
la transmission d'un message de réponse de libération de session N4 associé à la session PDU à l'SMF;
dans lequel le message de réponse de libération de session N4 comprend un rapport d'utilisation final pour la session PDU.
